# EUROPÄISCHE PATENTSCHRIFT

(11) **EP 2 611 847 B1**
(45) Veröffentlichungstag und Bekanntmachung des Hinweises auf die Patenterteilung: **07.11.2018**
(21) Anmeldenummer: 11821209.1
(22) Anmeldetag: 31.08.2011
(51) Int. Cl.: C08G 18/48, C08G 65/08, C08G 65/02

(54) **AMPHIPHIL ZUR SOLUBILISIERUNG SCHWERLÖSLICHER WIRKSTOFFE**
AMPHIPHILE FOR SOLUBILIZATION OF WATER-SOLUBLE ACTIVE INGREDIENTS
AMPHIPHILE SERVANT À SOLUBILISER DES SUBSTANCES ACTIVES DIFFICILEMENT SOLUBLES

(30) Priorität: 01.09.2010 EP 10174797
(43) Veröffentlichungstag der Anmeldung: 10.07.2013
(73) Patentinhaber: BASF SE, 67056 Ludwigshafen am Rhein (DE)
(72) Erfinder: CRISTADORO, Anna, 64646 Heppenheim (DE); TÜRK, Holger, 68161 Mannheim (DE); ISHAQUE, Michael, 68165 Mannheim (DE); AL-HELLANI, Rabie, 67063 Ludwigshafen (DE)
(74) Vertreter: BASF IP Association
(86) Internationale Anmeldenummer: PCT/IB2011/053818
(87) Internationale Veröffentlichungsnummer: WO 2012/029038

(56) Entgegenhaltungen:
- WO-A1-94/00508
- WO-A1-03/062306
- WO-A2-03/040211
- WO-A2-2011/006838
- DE-A1- 4 319 672
- DE-A1-102008 030 992
- US-A- 4 599 433
- US-A1- 2006 178 475
- US-A1- 2008 229 972
- US-A1- 2012 053 057

## Beschreibung

Gegenstand der vorliegenden Erfindung ist ein Amphiphil der Formel (I) wie nachstehend beschrieben. Des Weiteren betrifft die Erfindung ein Verfahren zur Herstellung des Amphiphils sowie eine Zusammensetzung enthaltend das Amphiphil und einen in Wasser schwerlöslichen Wirkstoff. Weiterhin betrifft sie ein Verfahren zur Herstellung der Zusammensetzung, indem man das Amphiphil und den Wirkstoff in Kontakt bringt, und die Verwendung des Amphiphils zur Solubilisierung eines in Wasser schwerlöslichen Wirkstoffs in wässrigen Lösungen. Außerdem betrifft die Erfindung die Verwendung des Amphiphils in einer agrochemischen Formulierung enthaltend das Amphiphil und ein Pestizid zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, und schließlich pflanzliches Vermehrungsmaterial enthaltend das Amphiphil. Kombinationen bevorzugter Merkmale mit anderen bevorzugten Merkmalen werden von der vorliegenden Erfindung umfasst.

In vielen Fällen ist es erforderlich, hydrophobe Wirkstoffe in Wasser zu solubilisieren, ohne den betreffenden Wirkstoff als solchen chemisch zu verändern. Dazu ist es beispielsweise möglich, eine Emulsion herzustellen, wobei sich der betreffende Wirkstoff in der Ölphase der Emulsion befindet. Bei vielen pharmazeutischen Wirkstoffen oder insbesondere Pflanzenschutzmitteln, insbesondere bei solchen, die mit einer Körperflüssigkeit bzw. in einem Pflanzensaft transportiert werden sollen, ist ein derartiges Vorgehen jedoch nicht möglich. Unter der Einwirkung von hohen Scherkräften können Emulsionen brechen. Außerdem ist eine Sterilisierung beispielsweise für Pharmawirkstoffe unter Erhalt der Emulsion in vielen Fällen nicht möglich.

Hyperverzweigte Polyether und Verfahren zur Herstellung und Modifizierung sind allgemein bekannt:
WO 2010/000713 offenbart linear-dendritische Polyglycerolverbindungen und ihre Herstellung mittels sogenannter CLICK-Reaktion (1,3-dipolare Cycloaddition von Alkin und Azid unter Ausbildung eines Triazolrings). Diese Verbindungen können zur Solubilisierung von hydrophoben Substanzen eingesetzt werden.

EP 2 100 621 offenbart linear-dendritische Polyglycerolverbindungen und ihre Herstellung mittels sogenannter CLICK-Reaktion.

Grayson und Frechet (J. Am. Chem. Soc. 2000, 122, 10335-10344) offenbaren die Synthese und Funktionalisierung von aliphatischen Polyether Dendronen.

Jayaraman und Frechet (J. Am. Chem. Soc. 1998, 120, 12996-12997) offenbaren die Synthese von aliphatischen Polyether Dendrimeren und die Silylierung der fokalen Hydroxygruppe.

Richter et al. (Europ. J. Pharm. Sci. 2010, 40 (1), 48-55) offenbaren die Herstellung von nichtionischen, dendritischen, Glycerin-basierten Amphiphilen mittels sogenannter CLICK-Reaktion.

DE4319672 offenbart ein Verfahren zur Herstellung von Polyisobutylbernsteinsäureanhydriden aus Polyisobuten und Maleinsäureanhydrid.

US4599433 offenbart ein Verfahren zur Herstellung von Bernsteinsäureanhydrid durch Reaktion von dimeren oder polymeren Isobutenderivaten mit Maleinsäureanhydrid in Gegenwart eines Alkoxylates.

WO9400508 offenbart Bernsteinsäureester mit Polyethylenglycol oder Polypropylenglycol. Die Tenside haben Emulsions- und Dispersionswirkung.

WO03062306 beschreibt Dendromere Polyether, welche durch Alkylenoxide in den Seitenketten verlängert werden. Die Produkte werden als Dispersionsmittel für Pigmente und als Dispersionsharze für Alkydharze, Polyester, oder Polyurethane verwendet.

WO03040211 beschreibt wasserlösliche Polymere, welche chemisch an biologische Wirkstoffe gekoppelt werden, um die Wasserlöslichkeit zu erhöhen. Die Polymere sind_keine Dendromere.

DE102008030992 offenbart makromolekularen Amphiphile, welche Polyglycerin-Dendrimere sind. Das Polyglycerin-Dendron wird über einen Linker an einen hydrophoben Anker gebunden.

WO2011006838 ist Stand der Technik nach Art. 54(3) EPÜ und offenbart Copolymere enthaltend in polymerisierter Form mindestens eine ethylenisch ungesättigte Mono- oder Dicarbonsäure, mindestens eine besondere ethylenisch ungesättigte und alkoxylierte Monomereinheit, und ein weiteres Comonomer.

Nachteilig an den bekannten hyperverzweigten Polyethern und ihren Herstellverfahren ist, dass sie sehr aufwendige und teure Edukte benötigen, insbesondere für die CLICK-Reaktion. Die bekannten Herstellverfahren konnten daher nicht industriell angewandt werden. Weiterer Nachteil war, dass die bekannten Amphiphile nur kleine Mengen an schwerlöslichen Wirkstoffen solubilisieren können, da sie zumeist über eine gering ausgeprägte amphiphile Struktur verfügen. Weiterer Nachteil ist, dass als polare Endgruppen nur anionische Gruppen beschrieben werden. Jedoch sind anionische Gruppen in Formulierungen enthaltend Wirkstoffe unerwünscht, da es oft zu unerwünschten Wechselwirkungen, beispielsweise mit kationischen Wirkstoffen, kommt. Weiterer Nachteil ist, dass die Polarität der Amphiphile nur sehr grob einstellbar ist, beispielsweise durch Wechsel von einer anionischen Endgruppe zu einer anderen Art von anionischer Endgruppe.

Aufgabe der vorliegenden Erfindung war die vorgenannten Nachteile zu überwinden. Weiterhin sollte ein einfaches Herstellverfahren gefunden werden, das auf industriell verfügbaren Edukten beruht. Das Verfahren sollte in hohen Ausbeuten und möglichst ohne Aufreinigungsschritte das Amphiphil zugänglich machen. Das so hergestellte Amphiphil sollte hohe Konzentrationen an schwerlöslichen Wirkstoffen, wie Pestiziden, in wässrigen Lösungen zugänglich machen.

Die Aufgabe wurde gelöst durch ein Amphiphil der Formel (I) 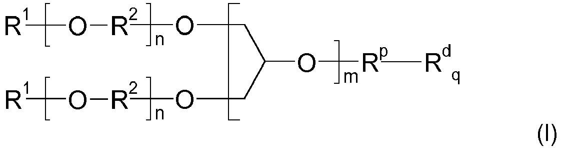 wobei
- R¹:: unabhängig voneinander H, C₁-C₁₀-Alkyl, -SO₃⁻, -PO₃²⁻ , -COO⁻, -R'-SO₃⁻, -R'-PO₃²⁻, oder -R'-CO₂⁻, wobei R' C₁-C₁₂-Alkylen ist;
- R²:: unabhängig voneinander C₂-C₅-Alkylen, wobei mindestens 50 mol% C₂-Alkylen in Bezug auf R₂ enthalten sind;
- n:: 1 bis 200;
- m:: 1 bis 6;
- q:: 0 bis 50;
- R^{p}:: ein unpolares Polymer R^{up} oder ein polares Polymer R^{pp}: und
- R^{d}:: ein unpolares Dendron R^{ud} oder ein polares Dendron R^{pd}.

R¹ ist bevorzugt unabhängig voneinander H oder C₁-C₁₀-Alkyl. Besonders bevorzugt ist R¹ H oder C₁-C₆-Alkyl. Ganz besonders bevorzugt ist R¹ H oder Methyl, insbesondere Methyl. R' ist bevorzugt C₂-C₆-Alkylen.

R² ist bevorzugt unabhängig voneinander Ethylen, Propylen, oder eine Mischung von Ethylen und Propylen. Die Alkylenreste von R² können einzeln oder in Mischungen von mehreren verschiedenen Alkylenresten vorhanden sein. Beispielsweise können Ethylen und Propylenreste gemischt sein. Die verschiedenen Alkylenreste können in statistischer Reihenfolge oder in Blockform vorhanden sein.

n ist bevorzugt 2 bis 100, besonders bevorzugt 4 bis 50 und ganz besonders bevorzugt 8 bis 40.

m ist bevorzugt 2 bis 5 und besonders bevorzugt 3 bis 4.

q ist bevorzugt 0 bis 20, besonders bevorzugt 0 bis 5 und speziell null oder eins. In einer weiteren bevorzugten Ausführungsform ist q null. In einer weiteren bevorzugten Ausführungsform ist q mindestens 1, besonders bevorzugt genau 1. In einer weiteren bevorzugten Ausführungsform ist q zwischen 2 und 20.

R^{p} bezeichnet einen Rest mit mindestens einer offenen Bindungstelle, über die RP zum Sauerstoff der Struktureinheit (V) verbunden ist. Wenn q größer oder gleich 1 ist, dann bezeichnet R^{p} einen Rest mit mindestens zwei offenen Bindungstellen. Dabei ist eine Bindungstelle wie beschrieben zum Sauerstoff von (V), und die weiteren offenen Bindungsstellen zu dem oder den Rest(en) R^{d}. R^{p} ist bevorzugt ein unpolares Polymer bzw. ein unpolarer Rest R^{up}. In einer speziellen Ausführungsform kann RP auch ein Gemisch verschiedenen Resten darstellen.

R^{d} ist ein unpolares Dendron R^{ud} oder ein polares Dendron R^{pd}. Üblicherweise ist Rd ein Rest mit mindestens einer offenen Bindungstelle, über die R^{d} mit R^{p} verbunden ist. Die Verbindung von R^{d} mit RP kann am Ende oder an einer beliebigen anderen Stelle in der Polymerkette von RP sein. R^{d} ist bevorzugt ein unpolares Dendron R^{ud}. In einer weiteren Ausführungsform ist R^{d} bevorzugt ein unpolares Dendron R^{ud} falls RP ein polares Polymer R^{pp} ist. In einer speziellen Ausführungsform kann R^{d} auch ein Gemisch verschiedener Dendrone darstellen.

Das Amphiphil der Formel (I) umfasst eine Gruppe der Formel (V)

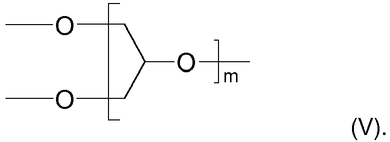

Diese Struktureinheit (V) kann ein Dendrimer oder ein hyperverzweigtes Polymer sein. Bevorzugt ist die Struktureinheit (V) ein Dendrimer. Solch ein Dendrimen hat typischerweise nur perfekt verzweigte Einheiten ohne Fehlstellen. Insbesondere bevorzugt ist, dass die Struktureinheit (V) ein Gemisch verschiedener Dendrimere unterschiedlicher Generation, ausgedrückt durch unterschiedliche Parameter m, darstellt. Weitere geeignete und bevorzugte Ausführungsformen dieser Struktur sind wie beim polaren Dendron der Formel (IV) beschrieben.

Geeignete unpolare R^{up} sind ausgewählt aus
UPa) -C(O)(CHR^{a})₂-CO₂H, wobei R^{a} unabhängig voneinander H, C₄-C₄₄-Alkyl, C₄-C₄₄-Alkenyl, C₆-C₄₄-Aryl, C₇-C₄₄-Aralkyl oder C₇-C₄₄-Alkylaryl ist, und wobei höchstens einer der beiden Reste R^{a} Wasserstoff ist;
UPb) -C(O)(CHR^{b})₂-CO₂H ist, wobei R^{b} unabhängig voneinander Wasserstoff oder eine Po-ly(C₂₋₁₂-alkylen)gruppe ist, die optional mindestens eine Carbonsäuregruppe, eine Carbonsäureanhydridgruppe oder einen über eine Carbonsäureestergruppe gebundenen Rest R^{d} enthalten kann, und wobei höchstens einer der beiden Reste R^{b} Wasserstoff ist;
UPc) einem Polymer enthaltend ein unpolares, ethylenisch ungesättigtes Monomer;
UPd) einem Polymer enthaltend Poly(C₂₋₅-alkylenoxid), wobei bis zu 50 mol% der C₂₋₅-Alkylenoxid Gruppen Ethylenoxid sind;
UPe) einem Polymer enthaltend Poly(caprolacton);
UPf) einem Polykondensat aus der Gruppe der Polyurethane, Polyesterpolyurethane, Polyetherpolyurethane, Polycarbonate, Polyester und Polyamide, wobei als monomere Einheiten Poly(C₃₋₅-alkylenoxid) und/oder ein polykondensierbares Monomer mit mindestens fünf Kohlenstoffatomen enthalten sind; oder
UPg) einem unpolaren Dendrimer oder unpolaren, hyperverzweigten Polymer.

Das unpolare Polymer R^{up} ist bevorzugt ausgewählt aus UPa oder UPb. In einer weiteren bevorzugten Ausführungsform ist das R^{up} UPa. In einer weiteren bevorzugten Ausführungsform ist das R^{up} UPb.

Bevorzugte unpolare Polymere UPa sind Reste -C(O)(CHR^{a})₂-CO₂H, wobei R^{a} unabhängig voneinander H, C₈-C₄₄-Alkyl, C₈-C₄₄-Alkenyl ist, und wobei höchstens einer der beiden Reste R^{a} Wasserstoff ist. Besonders bevorzugtes UPa sind Reste -C(O)(CHR^{a})₂-CO₂H, wobei R^{a} unabhängig voneinander H, C₁₄-C₃₂-Alkyl, C₁₄-C₃₂-Alkenyl ist, und wobei höchstens einer der beiden Reste R^{a} Wasserstoff ist. Solche Reste UPa sind üblichwerweise verknüpft mit der fokalen Hydroxygruppe durch deren Reaktion mit einem aliphatische Carbonsäureanhydrid, wie Alkenylbernsteinsäureanhyd rid.

Bevorzugte unpolare Polymere UPb sind die Reste -C(O)(CHR^{b})₂-CO₂H, wobei R^{b} unabhängig voneinander Wasserstoff oder eine Poly(C₂₋₆-alkylen)gruppe ist, und wobei höchstens einer der beiden Reste R^{b} Wasserstoff ist. Bevorzugt ist der Poly(C₂₋₆-alkylen)rest ein Polyethylen-, Polypropylen-, Polybutylen-, oder Polyisobutylen-rest, insbesondere ein Polybutylen- oder Polyisobutylen-rest. Die zahlenmittlere Molmasse kann im Bereich von 300 bis 20.000 g/mol liegen. Solche Reste UPb sind üblicherweise verknüpft mit der fokalen Hydroxygruppe durch deren Reaktion mit einem Carbonsäureanhydrid-terminierten Poly(C₂₋₁₂-alkylen), wie Polyisobutylenbernsteinsäureanhyd rid.

Bevorzugte unpolare Polymere UPc sind Polymere enthaltend ein unpolares, ethylenisch ungesättigtes Monomer, das ausgewählt ist aus C₁₋C₂₀-Alkyl(meth)acrylaten oder Vinylaromaten mit bis zu 20 C-Atomen. Das unpolare Polymer UPc kann minestens ein unpolares, ethylenisch ungesättigtes Monomer enthalten. Beispiele umfassen Methyl(meth)acrylat, Ethyl(meth)acrylat, n-Butyl(meth)acrylat, 2-Ethylhexyl(meth)acrylat, Lauryl(meth)acrylat , Stearyl(meth)acrylat oder 4-t-Butyl-cyclohexyl(meth)acrylat. Als vinylaromatische Verbindungen kommen z.B. Vinyltoluol, α-Butylstyrol, 4-n-Butylstyrol, 4-n-Decylstyrol oder Styrol in Betracht. Die Monomere sind normalerweise in polymerisierter Form im Polymer enthalten. Der Anteil an unpolaren Monomeren beträgt bevorzugt mindestens 50 mol%, besonders bevorzugt mindestens 70 mol%, in Bezug auf alle einpolymerisierten Monomere von UPc. Das unpolare Polymer kann als Homopolymer oder statistisches bzw. Block-Copolymer vorliegen. Die zahlenmittlere Molmasse liegt meist im Bereich von 500 bis 50000 g/mol, bevorzugt von 500 bis 20000 g/mol und besonders bevorzugt von 1000 bis 10000 g/mol. Das unpolare Polymer enthält meist mindestens eine funktionale Endgruppe, wie eine Alkohol-, Säure-, Amin-, oder Estergruppe. Die funktionale Endgruppe wird bevorzugt eingeführt über einen funktionalen Initiator oder Regler. Solche Polymere UPc sind üblicherweise verknüpft mit der fokalen Hydroxygruppe durch deren direkte Reaktion mit der funktionalen Endgruppe oder über einen niedermolekularen Linker, wie nachstehend beschrieben.

Bevorzugte unpolare Polymere UPd sind Polymere enthaltend Poly(C₂₋₅-alkylenoxid), wobei bis zu 50 mol% der C₂₋₅-Alkylenoxid Gruppen Ethylenoxid sind. Das Polymer kann als Homopolymer oder Blockpolymer vorliegen. Die zahlenmittlere Molmasse liegt meist im Bereich von 300 bis 20000 g/mol, bevorzugt von 300 bis 10000 g/mol und besonders bevorzugt von 500 bis 5000 g/mol (gemessen mittels GPC, in Dimethylacetamid mit Polymethylmethacrylat (PMMA) als Standard). Solche Polymere UPd sind üblicherweise verknüpft mit der fokalen Hydroxygruppe über einen niedermolekularen Linker, wie nachstehend beschrieben.

Bevorzugte unpolare Polymere UPe sind Polymere enthaltend Poly(caprolacton), wobei mindestens 50 mol% von UPe Poly(caprolacton) sind, bezogen auf UPe. UPe kann als Blockpolymer oder als Homopolymer vorliegen. Die zahlenmittlere Molmasse liegt meist im Bereich von 114 bis 50000 g/mol, besondere bevorzugt 114 bis 20000 g/mol. Solche Polymere UPe sind üblicherweise verknüpft mit der fokalen Hydroxygruppe durch ringöffnende Polymerisation oder über einen niedermolekularen Linker, wie nachstehend beschrieben.

Bevorzugte unpolare Polymere UPf sind Polykondensate aus der Gruppe der Polyurethane, Polyesterpolyurethane, Polyetherpolyurethane, Polycarbonate, Polyester und Polyamide, wobei als monomere Einheiten Poly(C₃₋₅-alkylenoxid), bevorzugt Polypropylenoxid, und/oder mindestens ein polykondensierbares Monomer mit mindestens fünf (bevorzugt mindestens sechs) Kohlenstoffatomen enthalten sind. Beispiele für polykondensierbares Monomere sind Disäuren, Diisocyanate, Diamine, oder Diester. Besonders bevorzugte Beispiele für polykondensierbares Monomere sind Glutarsäure, Adipinsäure, Sebacinsäure, Hexamethylendiisocyanat, Isophorondiisocyanat, 1,6-Hexandiol, Cyclohexandimethanol, 1,6-Hexamethylendiamin oder 1,8-Octamethylendiamin. Die zahlenmittlere Molmasse liegt meist im Bereich von 300 bis 10000 g/mol, bevorzugt von 300 bis 5000 g/mol und besonders bevorzugt von 500 bis 2000 g/mol. Solche Polymere UPe sind üblicherweise verknüpft mit der fokalen Hydroxygruppe durch deren direkte Reaktion mit der funktionalen Endgruppe oder über einen niedermolekularen Linker, wie nachstehend beschrieben.

Bevorzugte unpolare Polymere UPg sind hyperverzweigte Polyharnstoffe, hyperverzweigte Polycarbonate sowie hyperverzweigte Polyester basierend auf einer hydrophoben Dicarbonsäure und einem trifunktionellen Alkohol.

Ein hyperverzweigter Polyharnstoff ist allgemein bekannt, beispielsweise aus der anhängigen EP 09177370.5. Er ist bevorzugt erhältlich durch ein Verfahren umfassend die Umsetzung eines blockierten Di- oder Polyisocyanats mit mindestens einem mindestens difunktionellen primären und/oder sekundären Amin unter Eliminierung des Blockierungsmittels zum Polyharnstoff. Der Begriff "Polyharnstoff" umfasst im Sinne der vorliegenden Erfindung Polymere, die zusätzlich zu Harnstoffgruppen auch Urethangruppen, Allophanatgruppen, Biuretgruppen und weitere funktionelle Gruppen, wie bspw. Aminfunktionen aufweisen können. Die Urethangruppen sind meist O-Alkylurethangruppen, wobei der Alkylrest ein bis 18 Kohlenstoffatome aufweist. Bevorzugt sind die O-Alkylurethangruppen erhältlich durch Reaktion einer Isocyanatgruppe mit einem Monoalkohol, der als Blockierungsmittel eingesetzt wurde.

Ein hyperverzweigtes Polycarbonat ist allgemein bekannt, beispielsweise aus der anhängigen PCT/EP2010/056001. Es ist bevorzugt erhältlich durch a) Herstellung eines Kondensationsproduktes (K) durch Umsetzung eines organisches Carbonats (A) oder eines Phosgenderivates mit einem Alkohol (B1), der mindestens drei Hydroxygruppen aufweist, und b) intermolekularer Umsetzung von K zu dem hyperverzweigten Polycarbonat, wobei das Mengenverhältnis der OH-Gruppen zu den Carbonat- oder Phosgengruppen so gewählt wird, dass K im Mittel entweder i) eine Carbonat- oder Carbamoylchloridgruppe und mehr als eine OH-Gruppe, oder ii) eine OH-Gruppe und mehr als eine Carbonat- oder Carbamoylgruppe aufweist. Bevorzugt werden als organisches Carbonat (A) aliphatische Carbonate eingesetzt, insbesondere solche, bei denen die Reste 1 bis 5 C-Atome umfassen, wie zum Beispiel Dimethylcarbonat, Diethylcarbonat, Di-n-propylcarbonat, Di-n-butylcarbonat oder Diisobutylcarbonat. Speziell bevorzugt wird Diethylcarbonat. Beispiele für Alkohole (B1) mit mindestens drei OH-Gruppen umfassen Glycerin, Trimethylolmethan, Trimethylolethan, Trimethylolpropan, Trimethylolbutan, 1,2,4-Butantriol, 1,2,3-Hexantriol, 1,2,4-Hexantriol, Tris(hydroxy-methyl)amin, Tris(hydroxyethyl)amin, Tris(hydroxy-propyl)amin, Pentaerythrit, Diglycerin, Triglycerin, Polyglycerine, Bis(tri-methylol-propan), Tris(hydroxymethyl)isocyanurat, Tris(hydroxyethyl)isocyanurat, Phloroglucinol, Trihydroxytoluol, Trihydroxydimethylbenzol, Phloroglucide, Hexahydroxybenzol, 1,3,5-Benzoltrimethanol, 1,1,1-Tris(4'-hydroxyphenyl)methan, 1,1,1-Tris(4'-hydroxyphenyl)ethan, Zucker, wie zum Beispiel Glucose, Zuckerderivate, wie z.B. Sorbit, Mannit, Diglycerol, Threit, Erythrit, Adonit (Ribit), Arabit (Lyxit), Xylit, Dulcit (Galactit), Maltit, Isomalt, oder Polyesterol. Des weiteren kann B1 ein tri- oder höherfunktioneller Polyetherol sein auf Basis von Alkoholen, die mindestens drei OH-Gruppen aufweisen, und C₂-C₂₄ Alkylenoxid. Das Polyetherol enthält meist ein bis 30, bevorzugt ein bis 20, besonders bevorzugt ein bis 10 und ganz besonders bevorzugt ein bis acht Moleküle Ethylenoxid und/oder Propylenoxid und/oder iso-Butylenoxid pro Hydroxygruppe.

Ein hyperverzweigter Polyester basierend auf einer hydrophoben Dicarbonsäure und einem trifunktionellen Alkohol ist allgemein bekannt, beispielsweise aus der anhängigen EP 09179828.0. Als hydrophobe Dicarbonsäure ist eine aliphatische C₁₀-C₃₂ Dicarbonsäure geeignet. Bevorzugt sind Sebacinsäure, α,ω-Undecan-dicarbonsäure, α,ω-Dodecan-dicarbonsäure, Tridecan-dicarbonsäure (Brassylsäure), insbesondere Sebacinsäure. Als hydrophobe Dicarbonsäure ist auch eine Polyisobutylengruppe aufweisende Dicarbonsäure (im Folgenden auch "PIB-disäure" genannt) geeignet. Des Weiteren sind als hydrophobe Dicarbonsäure auch C₃-C₄₀ Gruppen aufweisende Bernsteinsäureeinheiten geeignet, bevorzugt substituierte Bernsteinsäureeinheiten der Formel (II) 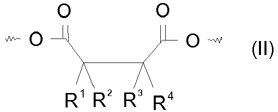 wobei R¹, R², R³ und R⁴ unabhängig voneinander für H, einen C₃ bis C₄₀-Al-kylrest oder einen C₃ bis C₄₀-Alkenylrest stehen, mit der Maßgabe, dass mindestens einer der Reste R¹, R², R³ und R⁴ nicht für H steht. Bevorzugt handelt es sich um Alkenylreste.
Bevorzugt stehen zwei oder drei der Reste R¹, R², R³ oder R⁴ für H und besonders bevorzugt stehen drei der Reste für H, d.h. die Bernsteinsäureeinheit weist nur eine Alkyl- oder Alkenylgruppe auf. Der eine Substituent kann sich in Position R¹ oder R³ befinden. Als trifunktioneller Alkohol sind Glycerin, Trimethylolethan, Trimethylolpropan, Bis(trimethylolpropan), Pentaerythrit, oder ein alkoxyliertes (bevorzugt ethoxyliertes oder propoxyliertes) Derivat davon geeignet. Selbstverständlich können auch Gemische mehrerer verschiedener trifunktioneller Alkohole eingesetzt werden. Bevorzugt als trifunktionelle Alkohole sind Glycerin, Trimethylolpropan und Pentaerythrit. Ganz besonders bevorzugt sind Glycerin und Trimethylolpropan.

Geeignete polare Polymere R^{pp} sind ausgewählt aus
PPa) einem Polymer enthaltend ein polares, ethylenisch ungesättigtes Monomer;
PPb) einem Polymer enthaltend Poly(C₂₋₅-alkylenoxid), wobei mindestens 50 mol% der C₂₋₅-Alkylenoxid Gruppen Ethylenoxid sind; oder
PPc) einem Polykondensat aus der Gruppe der Polyurethane, Polyesterpolyurethane, Polyetherpolyurethane, Polycarbonate, Polyester und Polyamide, wobei als monomere Einheiten Poly(ethylenoxid) und/oder ein polykondensierbares Monomer mit höchstens vier Kohlenstoffatomen enthalten sind.

Bevorzugtes polares Polymer R^{pp} ist das polare Polymer PPb.

Bevorzugte polare Polymere PPa sind Polymere enthaltend ein polares, ethylenisch ungesättigtes Monomer ausgewählt aus Vinylpyrrolidon, (Meth)Acrylsäure, ein Sulfonsäure-haltiges (Meth)Acrylat (wie Acrylamido-2-methylpropansulfonsäure), ein Amino-funktionelles (Meth)Acrylat (wie Dimethylaminoethyl(meth)acrylat), (Meth)Acrylsäureester von einem Polyethylenglykolderivat (wie Polyethylenglykolmonomethylether(meth)acrylat), Itaconsäure, Maleinsäureanhydrid, OH-Gruppen substituierte C₁-C₂₀-Alkyl(meth)acrylate (wie Hydroxyethyl(meth)acrylat, Hydroxypropyl(meth)acrylat), (Meth)Acrylnitril, (Meth)Acrylamid, N-Methylol(meth)acrylamid. Bevorzugte polare, ethylenisch ungesättigte Monomere sind Vinylpyrrolidon, (Meth)Acrylsäure, Polyethylenglykolmonomethylether(meth)acrylat, und Polyethylenglykol(meth)acrylat. Der Ausdruck "(Meth)Acryl" bedeutet "Acryl" oder "Methacryl". Die Monomere sind normalerweise in polymerisierter Form im Polymer enthalten. PPA kann mindestens ein Monomer einhalten. Der Anteil an polaren Monomeren beträgt bevorzugt mindestens 50 mol%, besonders bevorzugt mindestens 70 mol%, in Bezug auf alle einpolymerisierten Monomere von PPa. Das unpolare Polymer kann als Homopolymer oder statistisches bzw. Block-Copolymer vorliegen. Die zahlenmittlere Molmasse liegt meist im Bereich von 500 bis 50000 g/mol, bevorzugt von 500 bis 20000 g/mol und besonders bevorzugt von 1000 bis 10000 g/mol. Das unpolare Polymer enthält meist mindestens eine funktionale Endgruppe, wie eine Alkohol-, Säure-, Amin-, oder Estergruppe, bevorzugt eingeführt über einen funktionalen Initiator oder Regler. Solche Polymere PPa sind üblicherweise verknüpft mit der fokalen Hydroxygruppe durch deren direkte Reaktion mit der funktionalen Endgruppe oder über einen niedermolekularen Linker, wie nachstehend beschrieben.

Bevorzugte polare Polymere PPb sind Polymere enthaltend Poly(C₂₋₅-alkylenoxid), wobei mindestens 50 mol%, insbesondere mindestens 70 mol% der C₂₋₅-Alkylenoxid Gruppen Ethylenoxid sind. Das Polymer kann als Homopolymer oder Blockpolymer vorliegen. Die zahlenmittlere Molmasse liegt meist im Bereich von 300 bis 20000 g/mol, bevorzugt von 300 bis 10000 g/mol und besonders bevorzugt von 500 bis 5000 g/mol. Solche Polymere PPb sind üblicherweise verknüpft mit der fokalen Hydroxygruppe über einen niedermolekularen Linker, wie nachstehend beschrieben.

Bevorzugte polare Polymere PPc sind Polykondensate aus der Gruppe der Polyurethane, Polyesterpolyurethane, Polyetherpolyurethane, Polycarbonate, Polyester und Polyamide, wobei als monomere Einheiten Poly(ethylenoxid) und/oder ein polykondensierbares Monomer mit höchstens vier Kohlenstoffatomen enthalten sind.

Beispiels für polykondensierbares Monomer mit höchstens vier Kohlenstoffatomen sind Disäure, Diole, Diamine oder diester, insbesondere Bernsteinsäure, Ethylenglykol, 1,3-Propylenglykol, 1,4-Butandiol, Ethylendiamin, 1,4-Tetramethylendiamin.

Die zahlenmittlere Molmasse liegt meist im Bereich von 300 bis 10000 g/mol, bevorzugt von 300 bis 5000 g/mol und besonders bevorzugt von 500 bis 2000 g/mol. Solche Polymere PPc sind üblicherweise verknüpft mit der fokalen Hydroxygruppe durch deren direkte Reaktion mit der funktionalen Endgruppe oder über einen niedermolekularen Linker, wie nachstehend beschrieben.

Bevorzugte polare Polymere PPc sind Polyurethane, wie Polyesterpolyurethane und Polyetherpolyurethane.

Polyesterpolyurethane enthalten als hydrophile Abschnitte Polyesterpolyole (auch als "Polyesterole" bezeichnet) in einkondensierter Form. Polyesterpolyole enthalten pro Molekül mindestens zwei OH- Gruppen und mindestens zwei Estergruppen, das zahlenmittlere Molgewicht Mₙ dieser Verbindungen beträgt vorzugsweise mindestens 400 g/mol. Erfindungsgemäß bevorzugte Polyesterpolyole weisen ein zahlenmittleres Molekulargewicht Mₙ im Bereich von 400 bis 5000 g/mol, weiter bevorzugt von 400 bis 2000 g/mol auf.

Polyesterpolyole werden in der Regel durch die Reaktion von Dicarbonsäuren mit Polyolen bei hoher Temperatur hergestellt. Hinweise zur großtechnischen Herstellung von Polyesterpolyolen können beispielsweise dem Kunststoffhandbuch Polyurethane, herausgegeben von G. Oertel, 3. Aufl. 1993, Verlag Carl Hanser, Kap. 3.1.2, insbesondere Kap. 3.1.2.3, entnommen werden.

Polyetherpolyurethane enthalten als hydrophile Abschnitte Polyetherpolyole in einkondensierter Form. Polyetherpolyole (auch "Polyetherole") enthalten pro Molekül mindestens zwei OH-Gruppen und mindestens zwei Ethergruppen, wobei das Mₙ dieser Polyetherole vorzugsweise mindestens 1000 g/mol beträgt.

Polyetherpolyole sind in der Regel so stark hydrophil, dass sie bei Raumtemperatur (20°C) wasserlöslich sind. Die Herstellung von Polyetheralkoholen ist in M. lonescu, "Chemistry and technology of polyols for polyurethanes", Rapra Technology, 2005 beschrieben. Besonders geeignete Polyetherole sind beispielsweise die Polymerisationprodukte des Ethylenoxids (EO), deren Misch- oder Pfropfpolymerisationsprodukte sowie die durch Kondensation von mehrwertigen Alkoholen oder Mischung derselben und die durch Ethoxylierung von mehrwertigen Alkoholen, Amiden, Polyamiden und Aminoalkoholen gewonnenen Polyether. Beispiele dafür sind etwa Polyethylenglykole, Anlagerungsprodukte von Ethylenoxid an Trimethylolpropan oder EO-Propylenoxid (PO)-Blockcopolymere. Bevorzugt sind Polyole der allgemeinen Formel HO-(CH₂-CH₂-O)ₙ-H, wobei n die Werte im Bereich von 30 bis 450 annehmen kann. Vorzugsweise besitzen die Polyetherole Mₙ-Werte im Bereich von 1500 bis 12000 g/mol, weiter bevorzugt bis 10000 g/mol.

Geeignete Polyisocyanate für die polare Polymere PPc enthalten bevorzugt im Mittel 2 bis höchstens 4 NCO- Gruppen, wobei Diisocyanate besonders bevorzugt sind. In einer der bevorzugten Ausführungsformen enthalten die erfindungsgemäßen Polyurethane cycloaliphatische oder aliphatische Diisocyanatreste, besonders bevorzugt aliphatische Diisocyanatreste. Als einkondensierte aliphatische Diisocyanate seien beispielhaft genannt: 1,4-Butylendiisocyanat, 1,12-Dodecamethylendiisocyanat, 1,10-Decamethylendiisocyanat, 2-Butyl-2-ethylpentamethylendiisocyanat, 2,4,4- oder 2,2,4-Trimethylhexamethylendiisocyanat und insbesondere Hexamethylendiisocyanat (Hexan-1,6-diisocyanat, HDI). Als einkondensierte cycloaliphatische Diisocyanate seien beispielhaft genannt: Isophorondiisocyanat (IPDI), 2-Isocyanatopropylcyclohexylisocyanat, 4-Methyl-cyclohexan-1,3-diisocyanat (H-TDI) und 1,3-Bis-(isocyanatomethyl)-cyclohexan. Auch sogenannte H₁₂-MDI oder im Englischen "saturated MDI" genannte Diisocyanate, wie z.B. 4,4'-Methylen-bis-(cyclohexylisocyanat) (alternativ auch Dicyclohexylmethan-4,4'-diisocyanat genannt) oder 2,4'-Methylenbis(cyclohexyl)-diisocyanat können als Reste in den erfindungsgemäßen Polyurethanen enthalten sein.

In einer bevorzugten Ausführungsform der Erfindung wird zur Herstellung der erfindungsgemäßen Verbindungen ein gegenüber der Menge an OH-Gruppen der Polyole und gegebenenfalls Kettenverlängerer größere Menge an Isocyanat-Gruppen eingesetzt. Werden zur Herstellung der erfindungsgemäßen Verbindungen neben den Endgruppen beispielsweise ausschließlich Diole und Diisocyanate verwendet, so werden die Diisocyanate im molaren Überschuss eingesetzt.

Bevorzugte Polyetherpolyurethane umfassen Polyetherpolyole und Polyisocyanate in einkondensierter Form. Ein Gegenstand der Erfindung sind also oben beschriebene erfindungsgemäße Polymere, wobei weiterhin das Polymer ein Polyetherpolyurethan ist und a.) wenigstens ein Polyetherpolyol mit mindestens 2 OH Gruppen und b.) wenigstens ein Polyisocyanat in einpolymerisierter Form umfasst. Bevorzugt ist, dass das molare Verhältnis von NCO-Gruppen des Polyisocyanats zu OH-Gruppen des Polyetherpolyols vor der Polymerisation im Bereich von 1,2 zu 1 bis 2 zu 1, bevorzugt im Bereich von 1,4 zu 1 bis 1,8 zu 1 liegt.

Ein geeignetes unpolares Dendron R^{ud} ist eine Gruppe der Formel (II), 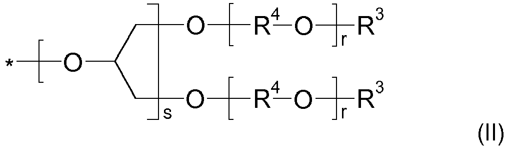 wobei
- R³:: unabhängig voneinander C₁₁-C₄₀-Alkyl, C₆-C₃₀-Aryl, C₇-C₄₀-Aralkyl, oder C₇-C₄₀-Alkylaryl, falls R⁴ Ethylen ist;
- R³:: unabhängig voneinander H, C₁-C₄₀-Alkyl, C₆-C₃₀-Aryl, C₇-C₄₀-Aralkyl, oder C₇-C₄₀-Alkylaryl, falls R⁴ C₃-C₅-Alkylen ist;
- R⁴:: unabhängig voneinander C₂-C₅-Alkylen;
- r:: 1 bis 200; und
- s:: 1 bis 6.

R⁴ ist bevorzugt unabhängig voneinander Ethylen, Propylen, Butylen, Pentylen oder eine Mischung von mehreren dieser Gruppen. Die Alkylenreste von R⁴ können einzeln oder in Mischungen von mehreren verschiedenen Alkylenresten vorhanden sein. Beispielsweise können Ethylen und Propylenreste gemischt sein. Die verschiedenen Alkylenreste können in statistischer Reihenfolge oder in Blockform vorhanden sein.

In einer Ausführungsform ist R⁴ Ethylen und R³ ist unabhängig voneinander C₁₁-C₄₀-Alkyl, C₆-C₃₀-Aryl, C₇-C₄₀-Aralkyl, oder C₇-C₄₀-Alkylaryl. Falls R⁴ Ethylen ist, dann ist R³ bevorzugt unabhängig voneinander C₁₂-C₃₀-Alkyl, C₆-C₃₀-Aryl, C₁₂-C₄₀-Aralkyl, oder C₁₂-C₄₀-Alkylaryl.

In einer Ausführungsform ist R⁴ C₃-C₅-Alkylen und R³ ist unabhängig voneinander H, C₁-C₄₀-Alkyl, C₆-C₃₀-Aryl, C₇-C₄₀-Aralkyl, oder C₇-C₄₀-Alkylaryl.

r ist bevorzugt 2 bis 100, besonders bevorzugt 4 bis 50 und ganz besonders bevorzugt 8 bis 40.

s ist bevorzugt 2 bis 5 und besonders bevorzugt 3 bis 4.

Ein geeignetes polares Dendron R^{pd} ist eine Gruppe der Formel (III), 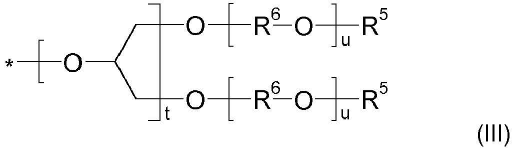 wobei
- R⁵:: unabhängig voneinander H, C₁-C₁₀-Alkyl, -SO₃⁻, -PO₃²⁻, -COO⁻, -R'-SO₃⁻, -R'-PO₃²⁻, oder -R'-CO₂⁻, wobei R' C₁-C₁₂-Alkylen ist;
- R⁶:: unabhängig voneinander C₂-C₅-Alkylen, wobei mindestens 50 mol% C₂-Alkylen in Bezug auf alle R⁶ enthalten sind;
- t:: 1 bis 6; und
- u:: 1 bis 200.

R⁵ ist bevorzugt unabhängig voneinander H oder C₁-C₁₀-Alkyl. Besonders bevorzugt ist R⁵ H oder C₁-C₆-Alkyl. Ganz besonders bevorzugt ist R⁵ H oder Methyl, insbesondere Methyl. R' ist bevorzugt C₂-C₆-Alkylen.

R⁶ ist bevorzugt unabhängig voneinander Ethylen, Propylen, Butylen, Pentylen oder eine Mischung davon, wobei mindestens 50 mol% Ethylen in Bezug auf alle R⁶ enthalten sind. Die Alkylenreste von R⁶ können einzeln oder in Mischungen von mehreren verschiedenen Alkylenresten vorhanden sein. Beispielsweise können Ethylen und Propylenreste gemischt sein. Die verschiedenen Alkylenreste können in statistischer Reihenfolge oder in Blockform vorhanden sein.

t ist bevorzugt 2 bis 5 und besonders bevorzugt 3 bis 4.

u ist bevorzugt 2 bis 100, besonders bevorzugt 4 bis 50 und ganz besonders bevorzugt 8 bis 40.

Die vorliegende Erfindung betrifft weiterhin ein Verfahren zur Herstellung des erfindungsgemäßen Amphiphils der Formel (I), umfassend die Reaktion der fokalen Hydroxygruppe eines polaren Dendrons der Formel (IV) 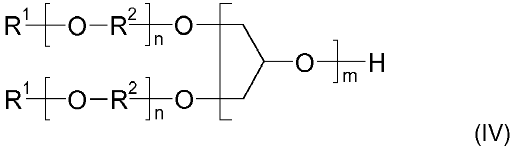
a) mit einer OH-reaktiven Gruppe des unpolaren Polymers R^{up} oder des polaren Polymers R^{pp}; oder
b) mit einer OH-reaktiven Gruppe eines niedermolekularen Linkers, der mit dem unpolaren Polymers R^{up} oder des polaren Polymers R^{pp} verbunden wird.

Das polare Dendron der Formel (IV) kann in der Struktur eines Dendrimers oder eines hyperverzweigtes Polymers vorliegen. Bevorzugt ist das polare Dendron ein Dendrimer. Dendrimere sind dadurch gekennzeichnet, dass nur perfekt verzweigte Einheiten ohne Fehlstellen vorliegen. Insbesondere bevorzugt ist, dass die Struktureinheit (IV) ein Gemisch verschiedener Dendrimere unterschiedlicher Generation, ausgedrückt durch unterschiedliche Parameter m, darstellt.

Hyperverzweigte Polymere und Dendrimere sind Bezeichnungen für Polymere, die sich durch eine stark verzweigte Struktur und eine hohe Funktionalität auszeichnen. Zwischen Dendrimeren und hyperverzweigten Polymeren bestehen aber dennoch deutliche Unterschiede im Aufbau: Dendrimere sind molekular einheitliche Makromoleküle mit einem hoch symmetrischen Aufbau. Dendrimere lassen sich, ausgehend von einem zentralen Molekül, durch kontrollierte, schrittweise Verknüpfung von jeweils zwei oder mehr di- oder mehrfach funktionellen Monomeren mit jedem bereits gebundenen Monomer herstellen (divergenter Ansatz). Dabei vervielfacht sich mit jedem Verknüpfungsschritt die Zahl der Monomerendgruppen (und damit der Verknüpfungen) um den Faktor 2 oder höher, und man erhält generationenweise aufgebaute, monodisperse Polymere mit baumartigen Strukturen, im Idealfall kugelförmig, deren Äste jeweils exakt dieselbe Anzahl von Monomereinheiten enthalten. Ein weiterer Ansatz besteht darin, die Monomere so zu verknüpfen, dass man die Strukturen von der Peripherie her aufbaut, bis man schließlich bei monofunktionellen, baumartigen Strukturen angelangt ist (konvergenter Ansatz).

Unter monofunktionell wird in diesem Zusammenhang die Monofunktionalität der fokalen Einheit verstanden.

Aufgrund der verzweigten Struktur sind die Polymereigenschaften vorteilhaft, beispielsweise beobachtet man eine überraschend geringe Viskosität und eine hohe Reaktivität aufgrund der hohen Anzahl funktioneller Gruppen an der Kugeloberfläche. Allerdings wird die Herstellung der monodispersen Dendrimere in der Regel dadurch verkompliziert, dass bei jedem Verknüpfungsschritt Schutzgruppen eingeführt und wieder entfernt werden müssen und vor Beginn jeder neuen Wachstumsstufe intensive Reinigungsoperationen erforderlich sind, weshalb man Dendrimere üblicherweise nur im Labormaßstab herstellt.

Im Gegensatz dazu sind hyperverzweigte Polymere sowohl molekular wie strukturell uneinheitlich, d.h. die Moleküle des Polymers weisen sowohl eine Verteilung hinsichtlich des Molekulargewichtes wie hinsichtlich der Struktur der Moleküle auf. Sie werden durch einen nichtgenerationenweisen Aufbau erhalten. Es ist daher auch nicht notwendig, Zwischenprodukte zu isolieren und zu reinigen. Hyperverzweigte Polymere können durch einfaches Vermischen der zum Aufbau erforderlichen Komponenten und deren Reaktion in einer sogenannten Ein-Topf-Reaktion erhalten werden. Hyperverzweigte Polymere können dendrimere Substrukturen aufweisen. Daneben weisen sie aber auch lineare Polymerketten und ungleiche Polymeräste auf. Nachteilig an den hyperverzweigten Polymeren ist, dass sie nur sehr schwierig einheitlich monofunktionell erhalten werden können, da oftmals mehrere fokale Gruppen in ein und demselben Makromolekül eingebaut bzw. speziell einkondensiert werden.

Polare Dendrone der Formel (IV) und ihre Herstellung sind allgemein bekannt, beispielsweise aus der anhängigen europäischen Patenanmeldung EP 09165576.1. Vorteil dieser Dendrone ist, dass sie ohne Verwendung von Schutzgruppen einfach darstellbar sind. Man erhält so über einen konvergenten Ansatz in einem mehrstufigen Verfahren sehr definierte, monofunktionelle Makromoleküle. Optional werden, wenn man aus ökonomischen Gründen auf Trennverfahren verzichten möchte, Gemische aus verschiedenen monofunktionellen Makromolekülen erhalten. Die Gemische bestehen dann aus mehreren Dendronen unterschiedlicher Generation (unterschiedliche Parameter m).

Zur Herstellung dieser polaren Dendrone der Formel (IV) setzt man mindestens eine Verbindung der allgemeinen Formel R¹-OH mit Glycerin oder vorzugsweise einem reaktiven Derivat von Glycerin (wie Epichlorhydrin, Glycidol oder Glycerincarbonat) um, insbesondere mit Epichlorhydrin. Dazu wählt man vorzugsweise ein Molverhältnis von Verbindung der allgemeinen Formel R¹-OH zu reaktivem Derivat von Glycerin, insbesondere Epichlorhydrin, wie 2:1. Die Herstellung kann man beispielsweise bei Temperaturen im Bereich von 20 bis 200 °C durchführen, bevorzugt bei 80 bis 130 °C. Die Herstellung kann man in Gegenwart eines Katalysators durchführen. Geeignete Katalysatoren sind beispielsweise anorganische und organische Basen. Setzt man Epichlorhydrin als reaktives Glycerinderivat ein, so dient die Base nicht nur als Katalysator, sondern auch zum Neutralisieren der entstehenden Salzsäure. Geeignete anorganische Basen sind beispielsweise Alkalimetallcarbonate und insbesondere Alkalimetallhydroxide wie NaOH und KOH. Geeignete organische Basen sind beispielsweise tertiäre Amine, insbesondere Triethylamin und [2,2,2]Diazabicyclooctan (DABCO), sowie Pyridin und para-N,N-Dimethylaminopyridin. In einer Ausführungsform kann man die Herstellung in einem Lösungsmittel durchführen. Geeignete Lösungsmittel sind beispielsweise Ether, insbesondere 1,4-Dioxan, Diisopropylether, Tetrahydrofuran ("THF") und Di-n-butylether. Weitere geeignete Lösungsmittel sind n-Butylacetat ("Butylacetat"), DMSO, N,N-Dimethylformamid ("DMF") und N-Methylpyrrolidon und aromatische Lösungsmittel wie beispielsweise Toluol.

In Ausführungsformen, in denen bei der Herstellung Wasser abgespalten wird, kann man Wasser entziehendes Mittel einsetzen, beispielsweise Molekularsieb, Natriumsulfat, Magnesiumsulfat, oder man kann das gebildete Wasser durch azeotrope Destillation entfernen. In einer Ausführungsform der vorliegenden Erfindung führt man die Umsetzung über einen Zeitraum von 15 Minuten bis 48 Stunden durch, bevorzugt 1 bis 24 Stunden, besonderes bevorzugt 3 bis 15 Stunden.

In einer Ausführungsform der vorliegenden Erfindung führt man die Umsetzung stufenweise durch, und zwar in so vielen Stufen, wie sie dem gewünschten m entspricht. Dabei wird reaktives Derivat von Glycerin, insbesondere Epichlorhydrin, in der betreffenden Zahl an Stufen zugesetzt. Zur stufenweisen Umsetzung kann man beispielsweise so vorgehen, dass man zunächst eine bestimmte Menge an Verbindung der allgemeinen Formel R¹-OH mit der halben Molzahl an Glycerin oder vorzugsweise mit einem reaktiven Derivat von Glycerin, insbesondere mit Epichlorhydrin, umsetzt. Danach gibt man eine Menge an Glycerin oder an reaktivem Derivat von Glycerin zu, die einem Viertel der Molzahl von Verbindung der allgemeinen Formel R¹-OH entspricht, und setzt um. Wünscht man eine weitere Stufe durchzuführen, so gibt man danach eine Menge an Glycerin oder an reaktivem Derivat von Glycerin zu, die einem Achtel der Molzahl an Verbindung der allgemeinen Formel R¹-OH entspricht, und setzt um. Bei jeder weiteren Stufe reduziert man die zugesetzte Molzahl an Verbindung der allgemeinen Formel R¹-OH entsprechend.

Unter einer fokalen Hydroxygruppen versteht man die einzelne endständige OH-gruppe im hyperverzweigten Polyether der Formel (IV).

Eine bevorzugte Ausführungsform a) der erfindungsgemäßen Herstellung umfasst die Reaktion der fokalen Hydroxygruppe eines polaren Dendrons der Formel (IV) mit einer OH-reaktiven Gruppe des unpolaren Polymers R^{up} oder des polaren Polymers R^{pp}. R^{up} und R^{pp} können eine OH-reaktive Gruppe enthalten, die mit der fokalen Hydroxygruppe reagieren kann. Bevorzugte OH-reaktive Gruppen sind ein Carbonsäureanhydrid, und Isocyanat.

Eine weitere bevorzugte Ausführungsform b) der erfindungsgemäßen Herstellung umfasst die Reaktion der fokalen Hydroxygruppe eines polaren Dendrons der Formel (IV) mit Lacton-Monomeren, Alkylenoxid-Monomeren oder ethylenisch ungesättigter Monomeren, wobei das Polymer Rup oder Rpp aus den Monomeren hergestellt wird. Üblicherweise gelingt die Erzeugung der Polymere R^{up} bzw. R^{pp} ausgehend von der fokalen Hydroxygruppe eines polaren Dendrons der Formel (IV) durch ring-öffnende Polymerisation, beispielsweise von Lactonen oder Alkylenoxiden, oder durch kontrollierte radikalische Polymerisation ethylenisch ungesättigter Monomere im Anschluss an eine entsprechende Funktionalisierung der fokalen Hydroxygruppe mit einem geeigneten Initiatormolekül, beispielsweise Alkylierung mit 2-Bromoisobutyrylbromid.

Eine weitere bevorzugte Ausführungsform c) der erfindungsgemäßen Herstellung umfasst die Reaktion der fokalen Hydroxygruppe eines polaren Dendrons der Formel (IV) mit einer OH-reaktiven Gruppe eines niedermolekularen Linkers, der mit dem unpolaren Polymer bzw. unpolaren Rest R^{up} oder dem polaren Polymer bzw. polaren Rest R^{pp} seinerseits über eine Linker-reaktive Gruppe verbunden wird.

Allgemein kommen als Linker reaktive polyfunktionelle Verbindungen mit mindestens zwei reaktiven Gruppen in Betracht. Bevorzugte Linker sind Polyisocyanate mit einer Funktionalität bezüglich der Isocyanatgruppen von wenigstens 1,5, insbesondere 1,5 bis 4,5 und speziell 1,8 bis 3,5. Beispiele sind aliphatische, cycloaliphatische und aromatische Di- und Polyisocyanate sowie die Isocyanurate, Allophanate, Uretdione und Biurete von aliphatischen, cycloaliphatischen und aromatischen Diisocyanaten. Beispiele für geeignete Polyisocyanate sind aromatische Diisocyanate wie Toluol-2,4-diisocyanat, Toluol-2,6-diisocyanat, kommerziell erhältliche Mischungen von Toluol-2,4- und -2,6-diisocyanat (TDI), n-Phenylendiisocyanat, 3,3'-Diphenyl-4,4'-biphenylendiisocyanat, 4,4'-Biphenylendiisocyanat, 4,4'-Diphenylmethandiisocyanat, 2,4'-Diphenylmethandiisocyanat, 3,3'-Dichlor-4,4'-biphenylendiisocyanat, Cumen-2,4-diisocyanat, 1,5-Naphthalindiisocyanat, p-Xylylendiisocyanat, p-Phenylendiisocyanat, 4-Methoxy-1,3-phenylendiisocyanat, 4-Chlor-1,3-phenylendiisocyanat, 4-Ethoxy-1,3-phenylendiisocyanat, 2,4-Dimethylen-1,3-phenylendiisocyanat, 5,6-Dimethyl-1,3-phenylendiisocyanat, 2,4-Diisocyanatodiphenylether, aliphatische Diisocyanate wie Ethylendiisocyanat, Ethylidendiisocyanat, Propylen-1,2-diisocyanat, 1,6-Hexamethylendiisocyanat (HDI), 1,4-Tetramethylendiisocyanat, 1,10-Decamethylendiisocyanat und cycloaliphatische Diisocyanate, wie Isophorondiisocyanat (IPDI), Cyclohexylen-1,2-diisocyanat, Cyclohe-xylen-1,4-diisocyanat und Bis(4,4'-lsocyanatocyclohexyl)methan. Unter den Polyisocyanaten sind solche bevorzugt, deren Isocyanatgruppen sich in ihrer Reaktivität unterscheiden, wie Toluol-2,4-diisocyanat, Toluol-2,6-diisocyanat, cis- und trans-Isophorondiisocyanat, oder Mischungen dieser Verbindungen.

Geeignete Ausführungsformen des unpolaren Polymers R^{up} und des polaren Polymers R^{pp} sind oben bezüglich des Amphiphils der Formel (I) beschrieben. Die dort beschriebenen offenen Bindungsstellen der Dendrone sind bei der Verwendung im erfindungsgemäßen Herstellverfahren mit OH-reaktiven Gruppen verbunden. Geeignete OH-reaktive Gruppen sind Carbonsäuren, aktivierte Carbonsäurederivate (wie Carbonsäureanhydride, z.B. in Form einer Bersteinsäureanhydridgruppe), Carbonsäureester, Carbonsäurehalogenide, Carbonate, Epoxide, alpha-betaungesättigte Carbonyl- und Carboxylverbindungen (wie Acrylsäureester), und Isocyanate. Bevorzugte OH-reaktive Gruppen sind Carbonsäureanhydride und Isocyanate. Die OH-reaktiven Gruppen sind entweder direkt in den Polymeren R^{up} bzw. R^{pp} enthalten, oder aber in den zu verwendenden Linkern.

Die dort beschriebenen offenen Bindungsstellen der Polymere R^{up} bzw. R^{pp} sind bei der Verwendung im erfindungsgemäßen Herstellverfahren entweder direkt mit den OH-Gruppen der Dendrone verbunden, beispielsweise über Carbonsäureanhydride, oder aber indirekt über Linkermoleküle. Im zweiten Fall besitzen die Polymere R^{up} oder R^{pp} sogenannte Linker-reaktive Gruppen. Bei Linker-reaktiven Gruppen handelt es sich beispielsweise um Hydroxygruppen, Carboxylgruppen, Aminogruppen, oder Thiolgruppen.

Linker-reaktive Gruppen können beispielsweise über einen geeigneten Initiator und/oder Regler eingeführt werden. Alternativ kann die Linker-reaktive Gruppe über eine kontrollierte radikalische Reaktion nach dem Stand der Technik (wie Atom Transfer Radical Polymerization (ATRP), Reversible Addition Fragmentation Chain Transfer Polymerization(RAFT), oder Nitroxide Mediated Polymerization (NMP)) gezielt an einem oder beiden Kettenenden eingeführt werden. Ebenso ist es möglich, dass eine funktionelle Gruppe in der Polymerkette als Linker-reaktive Gruppe verwendet wird, beispielsweise eine von gegebenenfalls mehreren OH-Gruppen eines einpolymerisierten Hydroxyethyl(meth)acrylats. Im Falle eines Polykondensats können Linker-reaktive Gruppe an den Kettenenden erzeugt werden durch eine geeignete Stöchiometrie, beispielweise kann man Isocyanat-funktionalisierte Polyurethane herstellen und erfindungsgemäß verwenden. Durch ring-öffnende Polymerisation eines Lactons kann zielgenau eine funktionelle Hydroxygruppe am Kettenende erzeugt werden. Im Falle eines Polyalkylenglykols kann als Linker-reaktive Gruppe eine Hydroxy-Gruppe an den Kettenenden verwendet werden.

Bei der Verbindung der Polymere R^{up} oder R^{pp} mit den Dendronen über Linkermoleküle geht man meist so vor, dass zunächst der Linker an die OH-Gruppe des Dendrons angekuppelt wird, um anschließend das Linker-haltige Dendron mit der Linker-reaktiven Gruppe von R^{up} bzw. R^{pp} zu verbinden. In einer weiteren Ausführungsform wird in umgekehrter Reihenfolge vorgegangen. Bevorzugt setzt man die weniger reaktive Komponente (beispielsweise eine OH-Gruppe) zuerst mit dem Linker um, um anschließend mit der reaktiveren Komponente (beispielsweise eine Aminogruppe) die Kupplungsreaktion abzuschließen.

Das erfindungsgemäße Verfahren zur Herstellung des Amphiphils der Formel (I) umfasst besonders bevorzugt die Reaktion der fokalen Hydroxygruppe eines polaren Dendrons der Formel (IV) mit der OH-reaktiven Gruppe von einem aliphatischen Isocyanat, aliphatischen Carbonsäureanhydrid, oder Carbonsäureanhydrid-terminierten Polyisobutylen, insbesondere mit der OH-reaktiven Gruppe von einem aliphatischen Carbonsäureanhydrid, oder einem Carbonsäureanhydrid-terminiertem Polyisobutylen.

Geeignete aliphatische Carbonsäureanhydride sind Alkenylbernsteinsäureanhydrid mit C₈₋₄₄-Alkenylrest. Beispiele sind n- oder iso-Hexenylbernsteinsäureanhydrid, n- oder iso-Heptenylbernsteinsäureanhydrid, n- oder iso-Octenylbernsteinsäureanhydrid, n- oder iso-Octadienylbernstein-säureanhydrid, n- oder iso-Nonenylbernsteinsäureanhydrid, n- oder iso-Decenylbern-steinsäureanhydrid, n- oder iso-Dodecenylbernsteinsäure-anhydrid (DDSA), n- oder iso-Tetradecenylbernsteinsäureanhydrid, n- oder iso-Hexadecenylbernsteinsäureanhydrid, n- oder iso-Octadecenylbernsteinsäureanhydrid, Tetrapropenylbernsteinsäureanhydrid, 2-Dodecenyl-3-tetradecenylbernsteinsäure-anhydrid. Selbstverständlich können auch Gemische verschiedener substituierter Anhydride eingesetzt werden. Besonders bevorzugte Produkte sind n- oder iso-Octenylbernsteinsäureanhydrid, n- oder iso-Dodecenylbernsteinsäureanhydrid (DDSA), n- oder iso-Tetradecenylbern-steinsäureanhydrid, n- oder iso-Hexadecenylbernsteinsäureanhydrid, n- oder iso-Octadecenylbernsteinsäureanhydrid, Tetrapropenylbernsteinsäureanhydrid oder Gemische der genannten Produkte. Ganz besonders bevorzugt sind n- oder iso-Hexadecenylbernsteinsäureanhydrid, n- oder iso-Octadecenylbernsteinsäureanhydrid, oder deren Gemische.

Geeignete Carbonsäureanhydrid-terminierte Polyisobutylene sind Polyisobutylenbernsteinsäureanhydrid (sog. PIBSA). Die Synthese von PIBSA ist in der Literatur als En-Reaktion zwischen Maleinsäureanhydrid und Polyisobutenen bekannt (z. B. DE-A 43 19 672, EP-A 156 310). In einer bevorzugten Ausführungsform handelt es sich um 1:1 (mol/mol) Reaktionsprodukte einer En-Reaktion eines Polyisobutens und des Enophils. Bevorzugt handelt es sich bei den Polyisobutenen um solche, die zu mindestens 60 mol-% Endgruppen aus Vinyl-Isomer und / oder Vinyliden-Isomer aufweisen. Geeignete Enophile sind Fumarsäuredichlorid, Fumarsäure, Itaconsäure, Itaconsäuredichlorid, Maleinsäuredichlorid, Maleinsäureanhydrid und/oder Maleinsäure, bevorzugt Maleinsäureanhydrid oder Maleinsäuredichlorid, besonders bevorzugt mit Maleinsäureanhydrid. Das zahlenmittlere Molekulargewicht Mₙ der PIB-säure beträgt bevorzugt mindestens 100 g/mol, besonders bevorzugt mindestens 200 g/mol. In der Regel beträgt das zahlenmittlere Molgewicht Mₙ bis zu 5000, besonders bevorzugt bis zu 2000 g/mol. In einer besonders bevorzugten Ausführungsform weisen die PIB-säuren ein zahlenmittleres Molekulargewicht Mₙ von 1000 +/- 500 g/mol auf.

Die Reaktion der fokalen Hydroxygruppe eines Dendrons R^{ud} bzw. R^{pd} mit der OH-reaktiven Gruppe kann bei Temperaturen von 20 bis 200 °C ablaufen, bevorzugt bei 80 bis 150 °C. Optional kann organisches Lösungsmittel zugesetzt werden. Bevorzugt wird kein Lösungsmittel zugesetzt. Die Reaktionsdauer richtet sich nach dem Fortschritt der Reaktion. Typischerweise dauert die Reaktion 10 min bis 72 h, bevorzugt 1 h bis 12 h. Das Molverhältnis der Reaktanden liegt meist im Bereich von 1:5 bis 5:1, bevorzugt im Bereich von 1:2 bis 2:1, besonders bevorzugt im Bereich von 1:1,1 bis 1,1:1. Je nach OH-reaktiver Gruppe wählt der Fachmann optional einen Katalysator aus. Für Carbonsäureanhydrid-Gruppen als OH-reaktive Gruppe ist meist kein Katalysatorzusatz nötig. Für Carbonsäuregruppen als OH-reaktive Gruppen können Titan (IV)-butylat oder Dibutylzinndilaurat (DBTL) als Katalysator verwendet werden. Für Isocyanate als OH-reaktive Gruppe können DBTL, Zink(II)-n-octanoat, Zink(II)-2-ethylhexanoat, Zink(II)-neodecanoat, Bismut-octanoat oder tertiäre Amine wie Dimethylcyclohexylamin und DABCO als Katalysator verwendet werden.

Das Umsetzungsprodukt des erfindungsgemäßen Herstellverfahrens kann direkt oder nach einfacher Aufreinigung weiterverwendet werden, beispielsweise in der erfindungsgemäßen Zusammensetzung.

Die Erfindung betrifft weiterhin eine Zusammensetzung enthaltend ein erfindungsgemäßes Amphiphil der Formel (I) oder ein Amphiphil, das nach dem erfindungsgemäßen Verfahren hergestellt wurde, und einen in Wasser schwerlöslichen Wirkstoff.

Der Wirkstoff ist üblicherweise in Wasser bei 20 °C zu höchstens 10 g/L, bevorzugt zu höchstens 2 g/l, besonders bevorzugt zu höchstens 0,5 g/l und speziell zu höchstens 0,1 g/l löslich. Die Zusammensetzung kann einen oder mehrere verschiedene Wirkstoffe enthalten. Beispiele für Wirkstoffe sind agrochemische Wirkstoffe, kosmetische Wirkstoffe, pharmazeutische Wirkstoffe oder Nahrungsergänzungsmittel (wie Vitamine und Carotinoide). Bevorzugte Wirkstoffe sind agrochemische Wirkstoffe.

Beispiele für kosmetische Wirkstoffe sind kosmetische Öle, Riech- und Aromastoffe, Vitamine oder UV-Absorber. Kosmetische Öle sind unter anderem Erdnussöl, Jojobaöl, Kokosnussöl, Mandelöl, Olivenöl, Palmöl, Ricinusöl, Sojaöl, Weizenkeimöl oder etherische Öle wie Latschenkiefernöl, Lavendelöl, Rosmarinöl, Fichtennadelöl, Kiefernnadelöl, Eukalyptusöl, Pfefferminzöl, Salbeiöl, Bergamotteöl, Terpentinöl, Melissenöl, Wacholderöl, Zitronenöl, Anisöl, Kardamomöl, Campheröl etc. oder deren Mischungen. UV-Absorber sind unter anderem 2-Hydroxy-4-methoxybenzophenon, 2,2',4,4'-Tetrahydroxybenzophenon, 2,2'-Dihydroxy-4,4'-dimethoxy-benzophenon, 2,4-Dihydroxybenzophenon, 2-Cyano-3,3-diphenylacrylsäure-2'-ethylhexylester, 2,4,6-Trianilino-p-(carbo-2-ethylhexyl-1'-oxi)-1,3,5-triazin, 3-(4-Methoxybenzyliden)-campher, N,N-Dimethyl-4-aminobenzoesäure-2-ethylhexylester, Salicylsäure-3,3,5-trimethylcyclohexylester, 4-Isopropyl-dibenzoylmethan, p-Methoxyzimtsäure-2-ethylhexylester und p-Methoxyzimtsäure-2-isoamylester sowie deren Mischungen.

Beispiele für Riech- und Aromastoffe sind wie in der WO 01/49817, oder in "Flavors and Fragrances", Ullmann's Encyclopedia of Industrial Chemistry, Wiley-VCH, 2002 beschrieben, auf die ausdrücklich Bezug genommen wird.

Beispiele für Vitamine sind Vitamine, Provitamine und Vitaminvorstufen aus den Gruppen A, C, E und F, insbesondere 3,4-Didehydroretinol, beta-Carotin (Provitamin des Vitamin A), Ascorbinsäure (Vitamin C), sowie die Palmitinsäureester, Glucoside oder Phosphate der Ascorbinsäure, Tocopherole, insbesondere alpha-Tocopherol sowie seine Ester, z.B. das Acetat, das Nicotinat, das Phosphat und das Succinat; weiterhin Vitamin F, worunter essentielle Fettsäuren, besonders Linolsäure, Linolensäure und Arachidonsäure, verstanden werden.

Als Beispiele für pharmazeutische Wirkstoffe seien hier genannt: Benzodiazepine, Antihypertensiva, Vitamine, Cytostatika insbesondere Taxol, Anästhetika, Neuroleptika, Antidepressiva, antiviral wirksame Mittel wie beispielsweise Anti-HIV wirksame Mittel, Antibiotika, Antimykotika, Antidementiva, Fungizide, Chemotherapeutika, Urologika, Thrombozytenaggregationshemmer, Sulfonamide, Spasmolytika, Hormone, Immunglobuline, Sera, Schilddrüsentherapeutika, Psychopharmaka, Parkinsonmittel und andere Antihyperkinetika, Ophthalmika, Neuropathiepräparate, Calciumstoffwechselregulatoren, Muskelrelaxantia, Narkosemittel, Lipidsenker, Lebertherapeutika, Koronarmittel, Kardiaka, Immuntherapeutika, regulatorische Peptide und ihre Hemmstoffe, Hypnotika, Sedativa, Gynäkologika, Gichtmittel, Fibrinolytika, Enzympräparate und Transportproteine, Enzyminhibitoren, Emetika, Durchblutungsfördernde Mittel, Diuretika, Diagnostika, Corticoide, Cholinergika, Gallenwegstherapeutika, Antiasthmatika, Broncholytika, Betarezeptorenblocker, Calciumantagonisten, ACE-Hemmer, Arteriosklerosemittel, Antiphlogistika, Antikoagulantia, Antihypotonika, Antihypoglykämika, Antihypertonika, Antifibrinolytika, Antiepileptika, Antiemetika, Antidota, Antidiabetika, Antiarrhythmika, Antianämika, Antiallergika, Anthelmintika, Analgetika, Analeptika, Aldosteronantagonisten, Abmagerungsmittel.

Der Begriff agrochemische Wirkstoffe (im Folgenden auch Pestizide genannt) bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide und Herbizide, insbesondere Insektizide. Auch Mischungen von Pestiziden aus zwei oder mehr der vorgenannten Klassen können verwendet werden. Der Fachmann ist vertraut mit solchen Pestiziden, die beispielsweise in Pesticide Manual, 14th Ed. (2006), The British Crop Protection Council, London, gefunden werden können. Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, Organozinn-Verbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Carbonsäureamdide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxyanilides, Imidazole, Imidazolinone, Anorganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, Isoxazolidinone, Nitrile, N-phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolocarboxamide, Triazolopyrimidine, Triketone, Uracile, Harnstoffe.

In einer Ausführungsform enthält das Pestizid ein Insektizid, bevorzugt besteht das Pestizid aus mindestens einem Insektizid. Bevorzugte Insektizide sind Fipronil, Allethrin, Alpha-Cypermethrin, Beta-Cyfluthrin, Bifenthrin, Bioallethrin, 4-Chlor-2-(2-chlor-2methylpropyl)-5-[(6-iod-3-pyridinyl)methoxy]-3(2H)-pyridazinone (CAS-RN: 120955-77-3), Chlorfenapyr, Chlorpyrifos, Cyfluthrin, Cyhalothrin, Cypermethrin, Deltamethrin, Etofenprox, Fenoxycarb, Flufenoxuron, Hydramethylnon, Metaflumizone, Permethrin, Pyriproxifen, Silafluofen, Tebufenozide und Tralomethrin. Besonders bevorzugte Insektizide sind Fipronil, Alpha-Cypermethrin, Bifenthrin, Chlorfenapyr, Cyfluthrin, Cypermethrin, Deltamethrin, Etofenprox, Hydramethylnon, Metaflumizone, Permethrin. Ganz besonders bevorzugte Insektizide sind Fipronil, Alpha-Cypermethrin, Deltamethrin, Chlorfe-napyr, Hydramethylnon und Metaflumizone. Insbesondere bevorzugtes Insektizid ist Fipronil. In einer weiteren Ausführungsform enthält das Pestizid ein Fungizid, bevorzugt besteht das Pestizid aus mindestens einem Fungizid. Bevorzugte Fungizide sind Pyraclostrobin, Metconazol und Epoxiconazol. In einer weiteren Ausführungsform enthält das Pestizid ein Herbizid, bevorzugt besteht das Pestizid aus mindestens einem Herbizid. In einer weiteren Ausführungsform enthält das Pestizid ein Wachstumsregulator, bevorzugt besteht das Pestizid aus mindestens einem Wachstumsregulator.

Die erfindungsgemäße Zusammensetzung umfasst üblicherweise 0.1 bis 70 Gew.% Wirkstoff, bevorzugt 1 bis 60 Gew. %, insbesondere 3 bis 50 Gew.%, bezogen auf die Zusammensetzung. Die erfindungsgemäße Zusammensetzung enthält meist 0,01 bis 40 Gew.%, bevorzugt 0,05 bis 30 Gew.%, besonders bevorzugt 0,1 bis 20 Gew.% Amphiphil.

Das Gewichtsverhältnis von Amphiphil zu Wirkstoff liegt meist im Bereich von 1 : 50 bis 100 : 1, bevorzugt 1 : 5 bis 50 : 1, besonders bevorzugt 1 : 2 bis 25 : 1. Der Wirkstoff kann in gelöster Form oder in fester, partikulärer Form vorliegen. Die Wirkstoffpartikel können kristallin oder amorph sein. Die Partikelgröße kann 1 nm bis 10 µm betragen.

Die Zusammensetzung kann als Feststoff, Lösung, Emulsion, Suspension oder Suspoemulsion des Wirkstoffs vorliegen. Die erfindungsgemäße Zusammensetzung ist bevorzugt eine wässrige Zusammensetzung. In einer weiteren bevorzugten Ausführungsform ist die erfindungsgemäße Zusammensetzung ein Feststoff, wobei es sich besonders bevorzugt um eine feste Lösung (sog. Solid Solution) handelt. Bei festen Lösungen liegt der Wirkstoff üblicherweise in amorpher Form dispergiert in einer Polymermatrix vor. Bevorzugt enthält sie mindestens 40 Gew.%, besonders bevorzugt mindestens 60 Gew.%, und insbesondere mindestens 80 Gew.% Wasser. Üblicherweise enthält die Zusammensetzung höchstens 99 Gew.% Wasser.

Die erfindungsgemäße Zusammensetzung kann Formulierungshilfsmittel enthalten, wobei sich die Wahl der Hilfsmittel üblicherweise nach der konkreten Anwendungsform bzw. dem Wirkstoff richtet. Beispiele für geeignete Formulierungshilfsmittel sind Lösungsmittel, feste Trägerstoffe, oberflächenaktive Stoffe (wie Tenside, Schutzkolloide, Netzmittel und Haftmittel), organische und anorganische Verdicker, Bakterizide, Frostschutzmittel, Entschäumer, ggf. Farbstoffe und Kleber (z. B. für Saatgutbehandlung).

Als oberflächenaktive Stoffe (Adjuvantien, Netz-, Haft-, Dispergier oder Emulgiermittel) kommen die Alkali-, Erdalkali-, Ammoniumsalze von aromatischen Sulfonsäuren, z. B. von Lignin-(Borresperse®-Typen, Borregaard, Norwegen), Phenol-, Naphthalin-(Morwet®-Typen, Akzo Nobel, USA) und Dibutylnaphthalinsulfonsäure (Nekal®-Typen, BASF, Deutschland), sowie von Fettsäuren, Alkylund Alkylarylsulfonaten, Alkyl-, Lauryletherund Fettalkoholsulfaten, sowie Salze sulfatierter Hexa-, Hepta- und Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylenoder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol®-Typen, Clariant, Schweiz), Polycarboxylate (Sokalan®-Typen, BASF, Deutschland), Polyalkoxylate, Polyvinylamin (Lupamin®-Typen, BASF, Deutschland), Polyethylenimin (Lupasol®-Typen, BASF, Deutschland), Polyvinylpyrrolidon und deren Copolymere in Betracht.

In einer bevorzugten Ausführungsform ist der Wirkstoff ein Pestizid und die erfindungsgemäßen Zusammensetzungen liegen in Form einer agrochemischen Formulierung vor. Geeignete agrochemische Formulierungen sind wasserlösliche Konzentrate (SL, LS), redispergierbare Konzentrate (DC), emulgierbare Konzentrate (EC), Emulsionen (EW, EO, ES, ME), Suspensionen (SC, OD, FS) oder Suspoemulsionen (SE). Bevorzugt liegt die Zusammensetzung vor in Form eines emulgierbaren Konzentrates (EC), eines Suspensionskonzentrats (SC), eines wasserlöslichen Konzentrats (SL), einer Lösung für Saatgutbehandlung (LS), oder eines redispergierbaren Konzentrats (DC).

Die agrochemische Formulierung wird meist vor der Anwendung verdünnt, um den sogenannten Tankmix herzustellen. Zur Verdünnung kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht. Bevorzugt wird Wasser verwendet. Es ist auch möglich, das Amphiphil erst dem Tankmix zuzusetzen. In dieser Ausführungsform liegt die erfindungsgemäße Zusammensetzung in Form eines Tankmixes vor.

Die verdünnte Zusammensetzung wird üblicherweise durch Versprühen oder Vernebeln angewendet. Zu dem Tankmix können Öle verschiedenen Typs, Netzmittel, Adjuvants, Herbizide, Bakterizide, Fungizide unmittelbar vor der Anwendung (Tankmix) zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1%. Die Aufwandmengen liegen bei der Anwendung im Pflanzenschutz je nach Art des gewünschten Effektes zwischen 0,01 und 2,0 kg Wirkstoff pro ha.

Die Erfindung betrifft weiterhin ein Verfahren zur Herstellung der erfindungsgemäßen Zusammensetzung ist indem man das Amphiphil und den Wirkstoff in Kontakt bringt. Die Komponenten können durch allgemein bekannte Methoden, wie Mischen, Emulgieren oder Suspendieren, in Kontakt gebracht werden.

Die Erfindung betrifft weiterhin die Verwendung der erfindungsgemäßen Amphiphils in einer agrochemischen Formulierung enthaltend das Amphiphil und ein Pestizid zur Bekämpfung von phytopathogenen Pilzen und/oder unerwünschtem Pflanzenwuchs und/oder unerwünschtem Insekten oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Weiterhin ist die Verwendung der erfindungsgemäßen Zusammensetzung, insbesondere der agrochemischen Formulierungen, möglich zur Bekämpfung von unerwünschtem Insekten oder Milbenbefall auf Pflanzen und/oder zur Bekämpfung von phytopathogenen Pilzen und/oder zur Bekämpfung unerwünschten Pflanzenwuchs, wobei man Saatgüter von Nutzpflanzen mit der Zusammensetzung behandelt.

Die Erfindung betrifft weiterhin die Verwendung des erfindungsgemäßen Amphiphils zur Solubilisierung eines in Wasser schwerlöslichen Wirkstoffs in wässrigen Lösungen. Der Wirkstoff ist bevorzugt in Wasser bei 20 °C zu höchstens 10 g/L löslich. Solubilisierung bedeutet, dass in Anwesenheit des erfindungsgemäßen Amphiphils mehr Wirkstoff in Lösung gebracht werden kann als in dessen Abwesenheit bei ansonsten gleichen Bedingungen. Bevorzugt kann mindestens die doppelte Menge, besonders bevorzugt mindestens die fünffache und insbesondere die zehnfache Menge in Lösung gebracht werden.

Vorteile der vorliegenden Erfindung sind, dass eine hohe Konzentration von Wirkstoff in Lösung gebracht werden kann; dass die Herstellung des Amphiphils sehr einfach und großtechnisch möglich ist; und dass das Amphiphil selbst wasserlöslich oder wasserdispergierbar ist. Des Weiteren ist es möglich, Amphiphile ohne anionische Gruppen bereit zu stellen, so dass es in Zusammensetzungen enthaltend Wirkstoff zu keiner unerwünschten Wechselwirkung mit den Wirkstoffen oder anderen formulierungshilfsmitteln kommen kann. Außerdem ist es möglich über die Länge der polyalkylenoxidkette (wie auf Basis von R² in Formel (I) gebildet) die Polarität des Amphiphils, insbesondere des polaren Dendrons, sehr fein einzustellen.

Die folgenden Beispiele sollen die Erfindung erläutern ohne sie einzuschränken.

### Beispiele

Methylpolyethylenglykol (MPEG) hat eine mittlere Molmasse 350 g/mol, OH-Zahl 160 mg KOH/g, und ist kommerziell erhältlich als Pluriol® A 350 E von BASF SE. PIBSA 1000 beschreibt ein Polyisobutylen (M = 1000 g/mol) mit terminaler Bernsteinsäureanhydrid-Gruppe.

Alkenylbernsteinsäureanhydrid ist ein kommerziell erhältliches Alkenylbernsteinsäureanhydrid, wobei es sich bei den Alkenylresten um ungesättigte C₁₈ Einheiten handelt, erhältlich als Pentasize® 8 von Trigon Chemie. Die OH-Zahlen wurden nach DIN 53 240 gemessen. Die Säurezahlen wurden nach DIN EN ISO 2114 gemessen. GPC wurde mit Polymethylmethacrylat (PMMA) als Standard durchgeführt.

### Beispiel 1: Synthese polares Dendron D.1

Eine Lösung von 600 g (1,714 mol) Methylpolyethylenglykol in 2600 ml 1,4-Dioxan wurde vorgelegt. Unter Rühren gab man 160 g (2,852 mol) Kaliumhydroxid zu. Man erwärmte den Ansatz auf 103°C und tropfte dann in 30 min 79,3g (0,857 mol) Epichlorhydrin in 100 ml 1,4-Dioxan hinzu. Die Mischung wurde dann 2 h bei 103°C gerührt. Anschließend wurden 39,65 g (0,857 mol) Epichlorhydrin in 100 ml 1,4-Dioxan in 20 min bei 103°C zudosiert. Die Mischung wurde dann 22 h bei 103°C gerührt. Die entstandene braune, trübe Mischung wurde auf Raumtemperatur abgekühlt und abfiltriert. Danach destillierte man das Dioxan ab. Das braune klare Produkt D.1 wurde durch GPC charakterisiert (Mn = 885 g/mol, Mw = 1288 g/mol, in Dimethylacetamid).

### Beispiel 2: Synthese polares Dendron D.2

Eine Lösung von 500 g (1,429 mol) Methylpolyethylenglykol in 2400 ml 1,4-Dioxan wurde vorgelegt. Unter Rühren gab man 150 g (2,673 mol) Kaliumhydroxid zu. Man erwärmte den Ansatz auf 103°C und tropfte dann in 30 min 66,1g (0,714 mol) Epichlorhydrin in 100 ml 1,4-Dioxan hinzu. Die Mischung wurde dann 2 h bei 103°C gerührt. Anschließend wurden 33,04 g (0,357 mol) Epichlorhydrin in 100 ml 1,4-Dioxan in 20 min bei 103°C zudosiert und 2 h bei 103°C nachgerührt. Danach dosierte man 16,5 g (0,179 mol) Epichlorhydrin in 100 ml 1,4-Dioxan in 15 min bei 103°C hinzu und ließ die Mischung 20 h bei 103°C nachreagieren. Die entstandene braune trübe Mischung wurde auf Raumtemperatur abgekühlt und abfiltriert. Danach destillierte man das Dioxan ab. Das braune klare Produkt D.2 wurde durch GPC charakterisiert (Mn = 1700 g/mol, Mw = 2100 g/mol in Dimethylacetamid).

### Beispiel 3: Synthese polares Dendron D.3

Eine Lösung von 240 g (1,818 mol) Isopropylidenglycerin in 625 ml 1,4-Dioxan wurde vorgelegt. Unter Rühren gab man 240 g (4,277 mol) Kaliumhydroxid zu. Man erwärmte den Ansatz auf 103°C und tropfte dann in 30 min 84,1g (0,909 mol) Epichlorhydrin in 125 ml 1,4-Dioxan hinzu. Die Mischung wurde dann 2 h bei 103°C gerührt. Anschließend wurden 42,05 g (0,455mol) Epichlorhydrin in 125 ml 1,4-Dioxan in 20 min bei 103°C zudosiert und 2 h bei 103°C nachgerührt. Danach dosierte man 21,03 g (0,227 mol) Epichlorhydrin in 125 ml 1,4-Dioxan in 15 min bei 103°C hinzu und ließ die Mischung 20 h bei 103°C nachreagieren. Die entstandene dunkelbraune trübe Mischung wurde auf Raumtemperatur abgekühlt und abfiltriert. Danach destillierte man das Dioxan ab. Das braune klare Produkt D.3 wurde durch GPC charakterisiert (Mn = 655 g/mol, Mw = 984 g/mol in Dimethylacetamid)

### Beispiel 4: Synthese Amphiphil A.1

140 g Polymer aus Beispiel 1 (OH-Zahlen: 63 mg KOH/ g) und 157 g Polyisobutylenbersteinsäureanhydrid (PIBSA, M = 1000 g/mol) wurden vorgelegt. Man erwärmte auf 140°C unter Rühren, rührte die Mischung über einen Zeitraum von 4 Stunden, und kühlte dann auf Zimmertemperatur ab. Die Säure-Zahl betrug 25 mg KOH/g.

### Beispiel 5: Synthese Amphiphil A.2

143 g Polymer aus Beispiel 2 (OH-Zahlen: 44 mg KOH/ g) und 49 g C18-Alkenylbersteinsäure-anhydrid vorgelegt. Man erwärmte auf 140°C unter Rühren, rührte die Mischung über einen Zeitraum von 4 Stunden und kühlte dann auf Zimmertemperatur ab. Die Säure-Zahl betrug 25 mg KOH/g.

### Beispiel 6: Synthese Amphiphil A.3

150 g Polymer aus Beispiel 1 (OH-Zahlen: 63 mg KOH/ g) und 57 g C₁₈-Alkenylbersteinsäure-anhydrid wurden vorgelegt. Man erwärmte auf 140°C unter Rühren, rührte die Mischung über einen Zeitraum von 6 Stunden und kühlte dann auf Zimmertemperatur ab. Die Säure-Zahl betrug 49 mg KOH/g.

### Beispiel 7: Messung der Solubilisierung von Wirkstoffen durch Amphiphile

In einem 50 mL Becherglas wurden 100 mg Polymer eingewogen und in 9,900 g dest. Wasser gelöst. Anschließend wurde dem Ansatz jeweils 100 mg Wirkstoff zugewogen, um eine übersättigte Lösung zu erhalten. Das Gemisch wurde nun 24 h bei Raumtemperatur mit Hilfe eines Magnetrührers gerührt. Nach einstündiger Ruhezeit wurde überschüssiger (d.h. nicht solubilisierter) Wirkstoff durch Zentrifugieren abgetrennt. Die so erhaltene, klare bzw. opake Lösung wurde anschließend auf ihren Wirkstoffgehalt mittels UV-Spektroskopie untersucht. Die Wellenlänge der UV-spektroskopischen Messung sind in Tabelle 1 zusammengestellt. Die Ergebnisse sind in Tabelle 2 zusammengestellt.

**Tabelle 1:**

| Wirkstoff | Wellenlänge der UV-Messung [nm] |
|---|---|
| Carbamazepin | 286 |
| Pyren | 334 |
| Pyraclostrobin | 277 |
| Fipronil | 280 |

**Tabelle 2: Löslichkeit von Wirkstoffen [mg/l] mit OLECH-haltigen Polymeren**

| Löslichkeit [mg/l] in Gegenwart von | Piroxicam | Carbamazepin | Pyren | Pyraclostrobin | Fipronil |
|---|---|---|---|---|---|
| Ohne Polymer^{a)} | 21 | 140 | 0,1 | 22,5 | 3 |
| Beispiel 4 (A.1) | 40 | 331 | 91 | 190 | 139 |
| Beispiel 5 (A.2) | 45 | 333 | 77 | 193 | 88 |
| Beispiel 6 (A.3) | 47 | 384 | 83 | 196 | 88 |

| | | | | | |
|---|---|---|---|---|---|
| a) nicht erfindungsgemäß | | | | | |

### Beispiel 8 : Herstellung von Suspensionskonzentraten

Ein wässriges Suspensionskonzentrat von Fipronil wurde durch Mischen und Mahlen folgender Komponenten hergestellt: 96 g/l Fipronil, 32 g/l Propylenglykol, 2 g/l Bakterizid, 38 g/L Poly(ethylenglykol-block-propylenglykol-block-ethylenglykol), 4 g/L Magnesium-Aluminum-Silicat, 35 g/L Salz eines Phenolsulfonsäure-Harnstoff-Formaldehyd Kondensationsprodukts. Das Amphiphil aus Beispiel 4 (220 g/L) wurde nach dem Mahlen der Mischung zugesetzt und unter Rühren gelöst.

Die Partikelgröße (bestimmt mit Malvern Mastersizer 2000) in der resultierenden Suspension betrug D90 < 3,1 µm und D50 < 1,2 µm. Die Partikelgröße veränderte sich nicht bei der Lagerung (2 Wochen 54 °C) und es fand keine Aggregatbildung oder Phasentrennung statt. Ebenso bleibt der Wirkstoffgehalt während der Lagerung konstant.

Die wahre Viskosität (Brookfield Viskosimeter, 20 °C) betrug 134 mPas.

Die Suspension wurde bezüglich ihrer Verdünnungseigenschaften in 0,1%iger sowie 0,65%iger Verdünnung in CIPAC D Wasser bei 20 °C geprüft. Es zeigte sich nach 2 Stunden ruhiger Lagerung praktisch kein Bodensatz.

## Patentansprüche

1. Amphiphil der Formel (I) 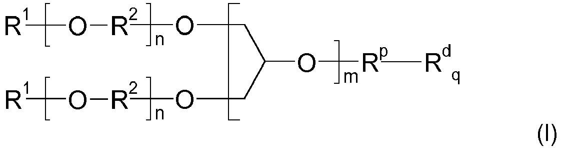 wobei
R¹: unabhängig voneinander H, C₁-C₁₀-Alkyl, -SO₃⁻, -PO₃²⁻, -COO⁻, -R'-SO₃⁻, -R'-PO₃²⁻, oder -R'-CO₂⁻, wobei R' C₁-C₁₂-Alkylen ist;
R²: unabhängig voneinander C₂-C₅-Alkylen, wobei mindestens 50 mol% C₂-Alkylen in Bezug auf R₂ enthalten sind;
n: 1 bis 200;
m: 1 bis 6;
q: 0 bis 50;
R^{p}: ein unpolares Polymer R^{up} oder ein polares Polymer R^{pp}: und
R^{d}: ein unpolares Dendron R^{ud} oder ein polares Dendron R^{pd}.

2. Amphiphil nach Anspruch 1, wobei R^{d} ein unpolares Dendron R^{ud} ist falls R^{p} ein polares Polymer R^{pp} ist.

3. Amphiphil nach Anspruch 1 oder 2, wobei R^{p} ein unpolares Polymer R^{up} ist.

4. Amphiphil nach einem der Ansprüche 1 bis 3, wobei das unpolare Polymer R^{up} ausgewählt ist aus
UPa) -C(O)(CHR^{a})₂-CO₂H, wobei R^{a} unabhängig voneinander H, C₄-C₄₄-Alkyl, C₄-C₄₄-Alkenyl, C₆-C₄₄-Aryl, C₇-C₄₄-Aralkyl oder C₇-C₄₄-Alkylaryl ist, und wobei höchstens einer der beiden Reste R^{a} Wasserstoff ist;
UPb) -C(O)(CHR^{b})₂-CO₂H ist, wobei R^{b} unabhängig voneinander Wasserstoff oder eine Poly(C₂-₁₂-alkylen)gruppe ist, die optional mindestens eine Carbonsäuregruppe, eine Carbonsäureanhydridgruppe oder einen über eine Carbonsäureestergruppe gebundenen Rest R^{d} enthalten kann, und wobei höchstens einer der beiden Reste R^{b} Wasserstoff ist;
UPc) einem Polymer enthaltend ein unpolares, ethylenisch ungesättigtes Monomer;
UPd) einem Polymer enthaltend Poly(C₂₋₅-alkylenoxid), wobei bis zu 50 mol% der C₂₋₅-Alkylenoxid Gruppen Ethylenoxid sind;
UPe) einem Polymer enthaltend Poly(caprolacton);
UPf) einem Polykondensat aus der Gruppe der Polyurethane, Polyesterpolyurethane, Polyetherpolyurethane, Polycarbonate, Polyester und Polyamide, wobei als monomere Einheiten Poly(C₃₋₅-alkylenoxid) und/oder ein polykondensierbares Monomer mit mindestens fünf Kohlenstoffatomen enthalten sind; oder
UPg) einem unpolaren Dendrimer oder unpolaren, hyperverzweigten Polymer.

5. Amphiphil nach Anspruch 4, wobei das unpolare Polymer R^{up} UPa oder UPb ist.

6. Amphiphil nach einem der Ansprüche 1 bis 5, wobei das polare Polymer R^{pp} ausgewählt ist aus
PPa) einem Polymer enthaltend mindestens ein polares, ethylenisch ungesättigtes Monomer;
PPb) einem Polymer enthaltend Poly(C₂₋₅-alkylenoxid), wobei mindestens 50 mol% der C₂₋₅-Alkylenoxid Gruppen Ethylenoxid sind; oder
PPc) einem Polykondensat aus der Gruppe der Polyurethane, Polyesterpolyurethane, Polyetherpolyurethane, Polycarbonate, Polyester und Polyamide, wobei als monomere Einheiten Poly(ethylenoxid) und/oder mindestens ein polykondensierbares Monomer mit höchstens vier Kohlenstoffatomen enthalten sind.

7. Amphiphil nach einem der Ansprüche 1 bis 6, wobei das unpolare Dendron R^{ud} eine Gruppe der Formel (II) 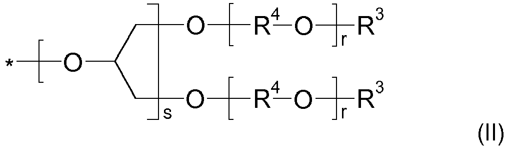 ist, wobei
R³: unabhängig voneinander C₁₁-C₄₀-Alkyl, C₆-C₃₀-Aryl, C₇-C₄₀-Aralkyl, oder C₇-C₄₀-Alkylaryl, falls R⁴ Ethylen ist;
R³: unabhängig voneinander H, C₁-C₄₀-Alkyl, C₆-C₃₀-Aryl, C₇-C₄₀-Aralkyl, oder C₇-C₄₀-Alkylaryl, falls R⁴ C₃-C₅-Alkylen ist;
R⁴: unabhängig voneinander C₂-C₅-Alkylen;
r: 1 bis 200; und
s: 1 bis 6.

8. Amphiphil nach einem der Ansprüche 1 bis 7, wobei das polare Dendron R^{pd} eine Gruppe der Formel (III) 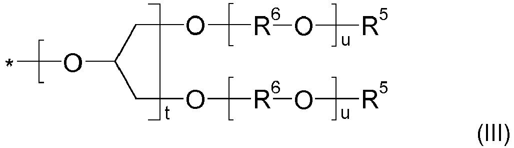 ist, wobei
R⁵: unabhängig voneinander H, C₁-C₁₀-Alkyl, -SO₃⁻, -PO₃²⁻, -COO⁻, -R'-SO₃⁻, -R'-PO₃⁻, oder -R'-CO₂⁻, wobei R' C₁-C₁₂-Alkylen ist;
R⁶: unabhängig voneinander C₂-C₅-Alkylen, wobei mindestens 50 mol% C₂-Alkylen in Bezug auf alle R⁶ enthalten sind;
t: 1 bis 6; und
u: 1 bis 200.

9. Amphiphil nach einem der Ansprüche 1 bis 7, wobei R¹ unabhängig voneinander H oder C₁-C₁₀-Alkyl ist.

10. Verfahren zur Herstellung des Amphiphils der Formel (I) gemäß einem der Ansprüche 1 bis 8, umfassend die Reaktion der fokalen Hydroxygruppe eines polaren Dendrons der Formel (IV) 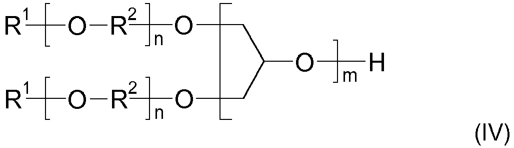
a) mit einer OH-reaktiven Gruppe des unpolaren Polymers R^{up} oder des polaren Polymers R^{pp};
b) mit Lacton-Monomeren, Alkylenoxid-Monomeren oder ethylenisch ungesättigter Monomeren, wobei das Polymer Rup oder Rpp aus den Monomeren hergestellt wird; oder
c) mit einer OH-reaktiven Gruppe eines niedermolekularen Linkers, der mit dem unpolaren Polymer R^{up} oder dem polaren Polymer R^{pp} verbunden wird.

11. Zusammensetzung enthaltend ein Amphiphil gemäß einem der Ansprüche 1 bis 9 oder hergestellt nach Anspruch 10, und einen in Wasser schwerlöslichen Wirkstoff.

12. Verfahren zur Herstellung der Zusammensetzung gemäß Anspruch 11, indem man das Amphiphil und den Wirkstoff in Kontakt bringt.

13. Verwendung des Amphiphils gemäß einem der Ansprüche 1 bis 9 oder hergestellt gemäß Anspruch 10 zur Solubilisierung eines in Wasser schwerlöslichen Wirkstoffs in wässrigen Lösungen.

14. Verwendung der Amphiphils gemäß einem der Ansprüche 1 bis 9 oder hergestellt gemäß Anspruch 10 in einer agrochemischen Formulierung enthaltend das Amphiphil und ein Pestizid zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man das Amphiphil auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt.

15. Pflanzliches Vermehrungsmaterial enthaltend das Amphiphil gemäß einem der Ansprüche 1 bis 9 oder hergestellt gemäß Anspruch 10.

## Claims

1. An amphiphile of the formula (I) 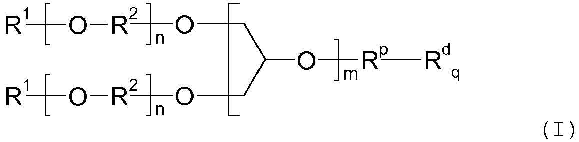 where
R¹: each independently H, C₁-C₁₀-alkyl, -SO₃⁻, -PO₃²⁻, -COO⁻, -R'-SO₃⁻, -R'-PO₃²⁻, or -R'-CO₂⁻, where R' is C₁-C₁₂-alkylene;
R²: each independently C₂-C₅-alkylene, where at least 50 mol% of C₂-alkylene is present in respect of R²;
n: 1 to 200;
m: 1 to 6;
q: 0 to 50;
R^{p}: a nonpolar polymer R^{np} or a polar polymer R^{pp}; and
R^{d}: a nonpolar dendron R^{nd} or a polar dendron R^{pd}.

2. An amphiphile according to claim 1, wherein R^{d} is a nonpolar dendron R^{nd} if R^{p} is a polar polymer R^{pp}.

3. An amphiphile according to claim 1 or 2, wherein RP is a nonpolar polymer R^{np}.

4. An amphiphile according to any of claims 1 to 3, wherein the nonpolar polymer R^{np} is selected from
NPa) -C(O)(CHR^{a})₂-CO₂H, where R^{a} is independently H, C₄-C₄₄-alkyl, C₄-C₄₄-alkenyl, C₆-C₄₄-aryl, C₇-C₄₄-aralkyl or C₇-C₄₄-alkylaryl, and where at most one of the two R^{a} radicals is hydrogen;
NPb) -C(O)(CHR^{b})₂-CO₂H, where R^{b} is independently hydrogen or a poly(C₂₋₁₂-alkylene) group, which may optionally comprise at least one carboxylic acid group, a carboxylic anhydride group or an R^{d} radical bonded via a carboxylic ester group and where at most one of the two R^{b} radicals is hydrogen;
NPc) a polymer comprising a nonpolar, ethylenically unsaturated monomer;
NPd) a polymer comprising poly (C₂₋₅-alkylene oxide), where up to 50 mol% of the C₂₋₅-alkylene oxide groups are ethylene oxide;
NPe)a polymer comprising poly(caprolactone);
NPf) a polycondensate from the group of the polyurethanes, polyesterpolyurethanes, polyetherpolyurethanes, polycarbonates, polyesters and polyamides, where the monomeric units present are poly (C₃₋₅-alkylene oxide) and/or a polycondensable monomer having at least five carbon atoms; or
NPg)a nonpolar dendrimer or nonpolar, hyperbranched polymer.

5. An amphiphile according to claim 4, wherein the nonpolar polymer R^{np} is NPa or NPb.

6. An amphiphile according to any of claims 1 to 5, wherein the polar polymer R^{pp} is selected from
PPa) a polymer comprising at least one polar, ethylenically unsaturated monomer;
PPb) a polymer comprising poly (C₂₋₅-alkylene oxide), where at least 50 mol% of the C₂₋₅-alkylene oxide groups are ethylene oxide; or
PPc) a polycondensate from the group of the polyurethanes, polyesterpolyurethanes, polyetherpolyurethanes, polycarbonates, polyesters and polyamides, where the monomeric units present are poly(ethylene oxide) and/or at least one polycondensable monomer having at most four carbon atoms.

7. An amphiphile according to any of claims 1 to 6, wherein the nonpolar dendron R^{nd} is a group of the formula (II) 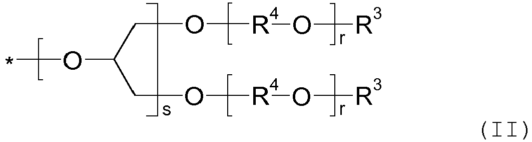 where
R³: each independently C₁₁-C₄₀-alkyl, C₆-C₃₀-aryl, C₇-C₄₀-aralkyl, or C₇-C₄₀-alkylaryl, if R⁴ is ethylene;
R³: each independently H, C₁-C₄₀-alkyl, C₆-C₃₀-aryl, C₇-C₄₀-aralkyl, or C₇-C₄₀-alkylaryl, if R⁴ is C₃-C₅-alkylene;
R⁴: each independently C₂-C₅-alkylene;
r: 1 to 200; and
s: 1 to 6.

8. An amphiphile according to any of claims 1 to 7, wherein the polar dendron R^{pd} is a group of the formula (III) 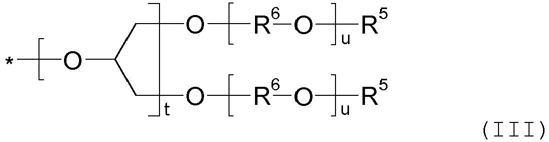 where
R⁵: each independently H, C₁-C₁₀-alkyl, -SO₃, -P0₃²⁻, -COO⁻ , -R' -SO₃⁻, -R'-PO₃⁻, or -R'-CO₂⁻, where R' is C₁-C₁₂-alkylene;
R⁶: each independently C₂-C₅-alkylene, where at least 50 mol% of C₂-alkylene is present in respect of all R⁶;
t: 1 to 6; and
u: 1 to 200.

9. An amphiphile according to any of claims 1 to 7, where R¹ is independently H or C₁-C₁₀-alkyl.

10. A process for preparing the amphiphile of the formula (I) according to any of claims 1 to 8, comprising the reaction of the focal hydroxyl group of a polar dendron of the formula (IV) 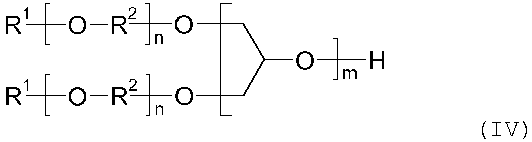
a) with an OH-reactive group of the nonpolar polymer R^{np} or of the polar polymer R^{pp};
b) with lactone monomers, alkylene oxide monomers or ethylenically unsaturated monomers, the polymer Rnp or Rpp being prepared from the monomers; or
c) with an OH-reactive group of a low molecular weight linker which is bonded to the nonpolar polymer R^{np} or the polar polymer R^{pp}.

11. A composition comprising an amphiphile according to any of claims 1 to 9 or prepared according to claim 10, and a sparingly water-soluble active ingredient.

12. A process for producing the composition according to claim 11, by contacting the amphiphile and the active ingredient.

13. The use of the amphiphile according to any of claims 1 to 9 or prepared according to claim 10 for solubilizing a sparingly water-soluble active ingredient in aqueous solutions.

14. The use of the amphiphile according to any of claims 1 to 9 or prepared according to claim 10 in an agrochemical formulation comprising the amphiphile and a pesticide for controlling phytopathogenic fungi and/or unwanted vegetation and/or unwanted insect or mite infestation and/or for regulating the growth of plants, wherein the amphiphile is allowed to act on the particular pests, their surroundings or the plants to be protected from the particular pests, the soil and/or unwanted plants and/or the crop plants and/or the surroundings thereof.

15. The plant propagation material comprising the amphiphile according to any of claims 1 to 9 or prepared according to claim 10.

## Revendications

1. Amphiphile de formule (I) 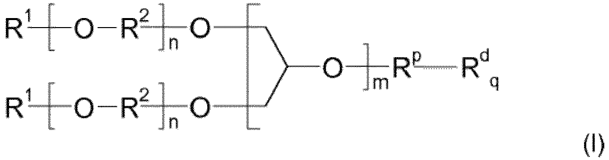 dans laquelle
les R¹ : indépendamment les uns des autres, H, un alkyle en C₁-C₁₀, -SO₃⁻, -PO₃²⁻, -COO⁻, -R'-SO₃⁻, -R'-PO₃²⁻ ou -R'-CO₂⁻, R' étant un alkylène en C₁-C₁₂;
les R² : indépendamment les uns des autres, un alkylène en C₂-C₅, au moins 50 % en moles d'alkylène en C₂ étant contenus par rapport aux R₂;
n : 1 à 200 ;
m : 1 à 6 ;
q : 0 à 50 ;
R^{p} : un polymère apolaire R^{up} ou un polymère polaire R^{pp}; et
R^{d} : un dendron apolaire R^{ud} ou un dendron polaire R^{pd}.

2. Amphiphile selon la revendication 1, dans lequel R^{d} est un dendron apolaire R^{ud} si R^{p} est un polymère polaire R^{pp}.

3. Amphiphile selon la revendication 1 ou 2, dans lequel R^{p} est un polymère apolaire R^{up}.

4. Amphiphile selon l'une quelconque des revendications 1 à 3, dans lequel le polymère apolaire R^{up} est choisi parmi :
UPa) -C(O)(CHR^{a}) ₂-CO₂H, les R^{a} représentant indépendamment les uns des autres H, un alkyle en C₄-C₄₄, un alcényle en C₄-C₄₄, un aryle en C₆-C₄₄, un aralkyle en C₇-C₄₄ ou un alkylaryle en C₇-C₄₄, au plus un des deux radicaux R^{a} représentant l'hydrogène ;
UPb) -C(O)(CHR^{b})₂-CO₂H, les R^{b} représentant indépendamment les uns des autres l'hydrogène ou un groupe poly(alkylène en C₂₋₁₂), qui peut éventuellement contenir au moins un groupe acide carboxylique, un groupe anhydride d'acide carboxylique ou un radical R^{d} relié par le biais d'un groupe ester d'acide carboxylique, au plus un des deux radicaux R^{b} représentant l'hydrogène ;
UPc) un polymère contenant un monomère apolaire éthyléniquement insaturé ;
UPd) un polymère contenant du poly(oxyde d'alkylène en C₂₋₅), jusqu'à 50 % en moles des groupes oxyde d'alkylène en C₂₋₅ étant de l'oxyde d'éthylène ;
UPe) un polymère contenant de la poly(caprolactone) ;
UPf) un polycondensat du groupe constitué par les polyuréthanes, les polyester-polyuréthanes, les polyéther-polyuréthanes, les polycarbonates, les polyesters et les polyamides ; du poly(oxyde d'alkylène en C₃₋₅) et/ou un monomère polycondensable contenant au moins cinq atomes de carbone étant contenus en tant qu'unités monomères ; ou
UPg) un dendrimère apolaire ou un polymère apolaire hyper-ramifié.

5. Amphiphile selon la revendication 4, dans lequel le polymère apolaire R^{up} est UPa ou UPb.

6. Amphiphile selon l'une quelconque des revendications 1 à 5, dans lequel le polymère polaire R^{pp} est choisi parmi :
PPa) un polymère contenant au moins un monomère polaire éthyléniquement insaturé ;
PPb) un polymère contenant du poly(oxyde d'alkylène en C₂₋₅) , au moins 50 % en moles des groupes oxyde d'alkylène en C₂₋₅ étant de l'oxyde d'éthylène ; ou
PPc) un polycondensat du groupe constitué par les polyuréthanes, les polyester-polyuréthanes, les polyéther-polyuréthanes, les polycarbonates, les polyesters et les polyamides ; du poly(oxyde d'éthylène) et/ou un monomère polycondensable contenant au plus quatre atomes de carbone étant contenus en tant qu'unités monomères.

7. Amphiphile selon l'une quelconque des revendications 1 à 6, dans lequel le dendron apolaire R^{ud} est un groupe de formule (II) 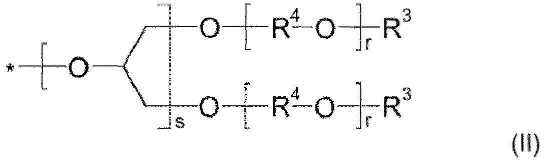 dans laquelle
les R³ : indépendamment les uns des autres, un alkyle en C₁₁-C₄₀, un aryle en C₆-C₃₀, un aralkyle en C₇-C₄₀ ou un alkylaryle en C₇-C₄₀, si R⁴ représente l'éthylène ;
les R³ : indépendamment les uns des autres, H, un alkyle en C₁-C₄₀, un aryle en C₆-C₃₀, un aralkyle en C₇-C₄₀ ou un alkylaryle en C₇-C₄₀, si R⁴ représente un alkylène en C₃-C₅ ;
les R⁴ : indépendamment les uns des autres, un alkylène en C₂-C₅ ;
r : 1 à 200 ; et
s : 1 à 6.

8. Amphiphile selon l'une quelconque des revendications 1 à 7, dans lequel le dendron polaire R^{pd} est un groupe de formule (III) 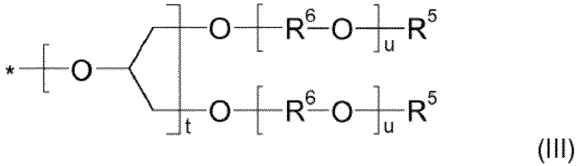 dans laquelle
les R⁵ : indépendamment les uns des autres, H, un alkyle en C₁-C₁₀, -SO₃⁻, -PO₃²⁻, -COO⁻, -R'-SO₃⁻, -R'-PO₃⁻ ou -R'-CO₂⁻, R' étant un alkylène en C₁-C₁₂ ;
les R⁶: indépendamment les uns des autres, un alkylène en C₂-C₅, au moins 50 % en moles d'alkylène en C₂ étant contenus par rapport à tous les R⁶ ;
t : 1 à 6 ; et
u : 1 à 200.

9. Amphiphile selon l'une quelconque des revendications 1 à 7, dans lequel les R¹ représentent indépendamment les uns des autres H ou un alkyle en C₁-C₁₀.

10. Procédé de fabrication de l'amphiphile de formule (I) selon l'une quelconque des revendications 1 à 8, comprenant la réaction du groupe hydroxy focal d'un dendron polaire de formule (IV) 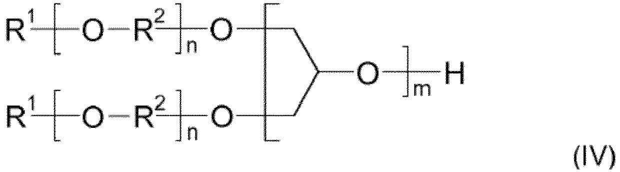
a) avec un groupe réactif avec OH du polymère apolaire R^{up} ou du polymère polaire RPP ;
b) avec des monomères de lactone, des monomères d'oxyde d'alkylène ou des monomères éthyléniquement insaturés, le polymère R^{up} ou R^{pp} étant fabriqué à partir des monomères ;
ou
c) avec un groupe réactif avec OH d'un agent de liaison de faible poids moléculaire qui est relié avec le polymère apolaire R^{up} ou le polymère polaire R^{pp}.

11. Composition contenant un amphiphile selon l'une quelconque des revendications 1 à 9 ou fabriqué selon la revendication 10, et un agent actif difficilement soluble dans l'eau.

12. Procédé de fabrication de la composition selon la revendication 11, par mise en contact de l'amphiphile et de l'agent actif.

13. Utilisation de l'amphiphile selon l'une quelconque des revendications 1 à 9 ou fabriqué selon la revendication 10 pour la solubilisation d'un agent actif difficilement soluble dans l'eau dans des solutions aqueuses.

14. Utilisation de l'amphiphile selon l'une quelconque des revendications 1 à 9 ou fabriqué selon la revendication 10 dans une formulation agrochimique contenant l'amphiphile et un pesticide pour lutter contre des champignons phytopathogènes et/ou une végétation indésirable et/ou une infestation indésirable par des insectes ou des acariens et/ou pour la régulation de la croissance de plantes, selon laquelle l'amphiphile est laissé agir sur les nuisibles en question, leur habitat ou les plantes à protéger contre le nuisible en question, le sol et/ou sur des plantes indésirables et/ou les plantes utiles et/ou leur habitat.

15. Matériau reproductif végétal contenant l'amphiphile selon l'une quelconque des revendications 1 à 9 ou fabriqué selon la revendication 10.
